# EUROPÄISCHE PATENTSCHRIFT

(11) **EP 4 479 447 B1**
(45) Veröffentlichungstag und Bekanntmachung des Hinweises auf die Patenterteilung: **22.10.2025**
(21) Anmeldenummer: 23702834.5
(22) Anmeldetag: 06.02.2023
(51) Int. Cl.: C08F 212/08, C08F 236/06, C08F 220/06, C08F 2/26, C08F 257/02, C09D 125/10, D21H 19/58, C08F 220/44

(54) **VERFAHREN ZUR HERSTELLUNG EINER WÄSSRIGEN POLYMERDISPERSION AUS VINYLAROMATISCHER VERBINDUNG UND KONJUGIERTEM ALIPHATISCHEN DIEN**
METHOD FOR THE PREPARATION OF AN AQUEOUS POLYMER DISPERSION COMPRISING VINYLAROMATIC COMPOUND AND CONJUGATED ALIPHATIC DIENE
PROCÉDÉ DE PRODUCTION D'UNE DISPERSION AQUEUSE DE POLYMÈRE À PARTIR DU COMPOSÉ VINYLAROMATIQUE ET DES DIÈNES ALIPHATIQUES CONJUGUÉS

(30) Priorität: 14.02.2022 EP 22156655
(43) Veröffentlichungstag der Anmeldung: 25.12.2024
(73) Patentinhaber: BASF SE, 67056 Ludwigshafen am Rhein (DE)
(72) Erfinder: CIMPEANU, Carmen-elena, 67056 Ludwigshafen (DE); JEHN-RENDU, Christian, 67056 Ludwigshafen (DE); BORDLEY, Justin Andrew, Charlotte, North Carolina 28273 (US); WOOD, Claudia, 67056 Ludwigshafen (DE)
(74) Vertreter: BASF IP Association
(86) Internationale Anmeldenummer: PCT/EP2023/052823
(87) Internationale Veröffentlichungsnummer: WO 2023/152084

(56) Entgegenhaltungen:
- EP-A1- 1 354 009
- WO-A1-2020/249406
- CN-A- 109 180 847
- US-A- 4 474 860
- US-A1- 2010 204 382

## Beschreibung

Die Erfindung betrifft ein Verfahren zur Herstellung einer wässrigen Polymerdispersion, die eine polymodale Teilchenverteilung der Polymerteilchen aufweist, indem eine vinylaromatische Verbindung und ein konjugiertes aliphatisches Dien copolymerisiert werden. Die nach dem Verfahren hergestellten wässrigen Polymerdispersionen und deren Verwendung als Bindemittel für Klebstoff, Schlichtemittel, Fasern, Beschichtungsmittel und Papierstreichmassen sind ebenso offenbart.

Bindemittel für Papierstreichmassen auf Basis von Copolymeren aus vinylaromatischen Verbindungen und aliphatischen Dienen werden oftmals für Anwendungen wie Verpackungskarton gewählt. Durch immer weitere Steigerung der Produktionsgeschwindigkeit der Papiermaschinen steigen die Anforderungen an die Rheologie der Streichmasse. Trotz des hohen Anteils von Pigment, das ja gröber als das Bindemittelpolymer ist, hat letzteres einen starken Einfluss auf die Rheologie einer Streichmasse. Die Viskosität der Streichmasse ließe sich durch größere Verdünnung herabsetzen, doch gerade das Gegenteil wird gewünscht. Somit sollen moderne Dispersionen einen hohen Feststoffgehalt haben und dennoch bei hohen Geschwindigkeiten eine geringe Viskosität aufweisen. Herkömmliche Polymeremulsionen mit einer monomodalen Partikelgrößenverteilung weisen im Allgemeinen einen Feststoffgehalt von ≤ 50 Gew.-% auf. Oberhalb von 50% Feststoffgehalt weisen die Dispersionen in der Regel eine nicht annehmbare Viskosität auf.

Peter C. Hayes beschreibt, dass bei hohen Feststoffgehalten von Streichmassen mit Styrol-Butadien-Bindemittel das Laufverhalten durch kleinere Teilchen des Bindemittels verbessert wird ("Styrene-butadiene and styrene-acrylic latexes in paper coating applications", Coating Material: Pigment Binders & Additives Short Course, Orange Beach, AL, United States, Mar. 11-13, 2002, Seiten 115-123, TAPPI PRESS, Atlanta, 2002).

Die US 4,567,099 und die US4,474,860 lehren den Einsatz eines Blends zweier Styrol/Butadien-Dispersionen unterschiedlicher Teilchengröße für Papierstrichanwendungen. Das Mischen zweier Dispersionen führt jedoch üblicherweise zu einer Verdünnung der Gesamtdispersion, da sich Dispersionen mit kleinen Teilchengröße nur mit einem niedrigeren Feststoffgehalt herstellen lassen. Erst durch anschließendes Aufkonzentrieren des Blends gelangt man zu höherer Feststoffgehalten. Ein solches Aufkonzentrieren, also nachträgliches Entfernen von Wasser ist energieintensiv und dauert länger. Überdies sind zwei Dispersionen vorab herzustellen, was für das Gesamtprodukt eine schlechte Raum/Zeit-Ausbeute bedeutet.

Die US 5,726,259 lehrt die Herstellung eines bimodalen Styrol/Butadien-Latexbinders für Papierstreichmassen. Der Latexbinder wird hergestellt, indem die Polymerisation mit einer in-situ-Saat gestartet wird, die Monomere portionsweise mittels 10 Monomergaben zugesetzt werden und nachdem 43 % der Gesamtmonomermenge dosiert und 44 % der Gesamtdosierzeit verstrichen waren, eine weitere in-situ-Saat hergestellt wird und damit das Wachstum einer zweiten Teilchenpopulation gestartet. Hiernach erhält man Polymerdispersionen mit einem Feststoffgehalt von 50 Gew.-%.

Die US 4780503 beschreibt ein Verfahren zur Herstellung einer bimodale Polymerdispersion, demgemäß zu einem Zeitpunkt von 43-53 % Monomerumsatz weiteres Laurylethersulfat dosiert wird. Gemäß dieser Lehre werden Dispersionen mit einem höheren Feststoffgehalt erhalten. Allerdings wird eine Reaktionszeit von 10 Stunden angegeben, was auf eine Reaktionstemperatur <80°C rückschließen lässt. Derart lange Reaktionszeiten sind unwirtschaftlich.

Die WO2020/249406 lehrt die Herstellung einer bimodalen Styrol/Butadien/Acrylsäure-Dispersion, indem nach 17 bis 25 % Zudosierung der Gesamtmonomermenge einmalig eine große Emulgatormenge zugesetzt wird und so das Wachstum einer zweiten Teilchenpolulation gestartet wird. Die so erhalten Dispersionen sind geruchsarm, weisen allerdings nur einen Feststoffgehalt von 53 Gew.-% auf.

Der vorliegenden Erfindung lag daher als Aufgabe zugrunde, ein Verfahren zur Herstellung von Styrol/Butadien-Polymerdispersionen mit einem Feststoffgehalt von mindestens 58 % zu finden, welches eine verbesserte Raum-Zeit-Ausbeute aufweist. Die hiernach erhaltenen Polymerdispersion sollen eine Viskosität < 1000 mPas, Brookfield, 100 U/min, Spindel 3 bei 23°C aufweisen, so dass sie eingearbeitet in Papierstreichmassen auch bei hohen Scherkräften ein gutes rheologisches Verhalten aufweisen. Bevorzugt sollen sie polymodal sein.

Die Aufgabe wird erfindungsgemäß gelöst durch ein Verfahren zur Herstellung einer wässrigen Polymerdispersion durch radikalisch initiierte wässrige Emulsionspolymerisation, dadurch gekennzeichnet, dass man in einem wässrigen Medium

| | | |
|---|---|---|
| (a) | 40 bis 75 Gew.-Teile | Styrol, |
| (b) | 24,9 bis 59,9 Gew.-Teile | Butadien, |
| (c) | 0,1 bis 10 Gew.-Teile | mindestens einer ethylenisch ungesättigten Carbonsäure und |
| (d) | 0 bis 15 Gew.-Teile | sonstige Monomere |

wobei sich die Gewichtsteile der Monomeren (a) bis (d) auf 100 Gew.-Teile aufsummieren, nach einem Monomerzulaufverfahren polymerisiert, welches die folgenden Schritte umfasst:
a) Vorlegen eines Saatlatex und 1 bis 10 Gew.-Teile Monomere bezogen auf die Gesamtmonomermenge,
b) Starten der Polymerisation bei einer Temperatur ≥ 80°C in dieser Vorlage,
c) und anschließendes stetiges Dosieren von Monomeren und Emulgator zu diesem Reaktionsgemisch,
c1) wobei zu einem Zeitpunkt, wenn 40 bis 55 % der Gesamtdosierzeit der Monomere verstrichen ist und 40 bis 55 Gew-Teile der zuzudosierenden Monomermenge zudosiert sind, die Dosierrate des Emulgators für eine Periode P2, die längstens 30 Minuten dauert, auf das 10 bis 150-fache der Durchschnittsdosierrate des Emulgators während der Periode P1 erhöht, wobei die Periode P1 die davorliegende Zeitspanne beginnend mit dem Start der Emulgatordosierung ist,
c2) und zu einem Zeitpunkt, wenn 60 bis 85 % der Gesamtdosierzeit der Monomere verstrichen ist und 60 bis 85 Gew-Teile der zuzudosierenden Monomermenge zudosiert sind, die Dosierrate des Emulgators für eine Periode P4, die längstens 30 Minuten dauert, auf das 10 bis 150-fache der Durchschnittsdosierrate des Emulgators der Periode P1 erhöht und
und mit der Maßgabe, dass die wässrige Polymerdispersion einen Feststoffgehalt von ≥58 Gew.-% aufweist.

Ebenso offenbart sind die nach den erfindungsgemäßen Verfahren erhaltene Dispersion, sowie deren Verwendung als Bindemittel, Klebstoff, Schlichtemittel für Fasern, zur Herstellung von Überzügen oder zur Herstellung einer Papierstreichmasse.

Im Folgenden werden Verbindungen, die sich von Acrylsäure und Methacrylsäure ableiten, teilweise verkürzt durch Einfügen der Silbe "(meth)" in die von der Acrylsäure abgeleitete Verbindung bezeichnet.

Unter Gesamtmonomermenge ist die Gesamtmenge aller in der Polymerisation eingesetzten Monomere, die sich auf 100 Gew.-Teile aufsummieren, zu verstehen.

Ist von der zuzudosierenden Monomermenge die Rede, so versteht man darunter die Gesamtmonomermenge abzüglich der Monomere der Vorlage. Wenn es heißt, dass 40 Gew.-Teile der zuzudosierenden Monomermenge zudosiert sind, so bezieht es sich auf den zudosierten Anteil. Unter Gesamtdosierzeit der Monomere, ist der Zeitraum zu verstehen, den die stetige Dosierung von Monomeren dauert. Die Dosierung kann in Form der Zugabe einer Mischung sowie in Form getrennter Monomere erfolgen, deren Zugabe auch zeitversetzt starten kann. Entscheidend ist, dass zu jedem Zeitpunkt Monomer dosiert wird, die Zugabe also stetig ist. Dementsprechend beginnt die Gesamtdosierzeit mit dem Beginn der Zudosierung des ersten Monomers/gemisches und endet mit dem Ende des letzten Monomers/gemisches.

Unter Dosierrate ist eine Menge zu verstehen, die in einer Zeiteinheit zugegeben wird also "Menge pro Zeit", üblicherweise in "g/min". Zum Beispiel ist die Durchschnittsdosierrate der Periode P1 des Emulgators die Menge aller Emulgatoren, die während der Periode P1 dosiert wird, bezogen auf die zeitliche Dauer der Periode.

Sofern vom Feststoffgehalt der wässrigen Dispersion in Gew.-% die Rede ist, basiert er auf dem Gewicht der wässrigen Dispersion.

Erfindungsgemäß wird eine Monomerzusammensetzung radikalisch polymerisiert, die Styrol, Butadien und mindestens eine ethylenisch ungesättigte Carbonsäure umfasst. Weiterhin können sonstige Monomere enthalten sein.

Als ethylenisch ungesättigte Carbonsäuren (Monomere (c)) seien beispielhaft 3 bis 6 C-Atome im Molekül aufweisende α,β-monoethylenisch ungesättigte Mono- und Dicarbonsäuren genannt. Beispiele hierfür sind Acrylsäure, Methacrylsäure, Itaconsäure, Maleinsäure, Fumarsäure, Crotonsäure, Vinylessigsäure und Vinylmilchsäure. Bevorzugt wird die mindestens eine ethylenisch ungesättigte Carbonsäuren ausgewählt unter Acrylsäure, Methacrylsäure und Itaconsäure.

Die ethylenisch ungesättigte Carbonsäuren können in Form der freien Säuren sowie in partiell oder vollständig mit geeigneten Basen neutralisierter Form bei der Polymerisation eingesetzt werden. Vorzugsweise verwendet man Natronlauge, Kalilauge und/oder Ammoniak als Neutralisationsmittel.

Sonstige monoethylenisch ungesättigte Monomere (d) werden gegebenenfalls zur Modifizierung der Polymeren eingesetzt. Diese sind von den Monomeren der Gruppen (a), (b), und (c) verschiedene Monomere, also weder Styrol, Butadien, noch ethylenisch ungesättigte Carbonsäuren.

Gemäß einer bevorzugten Ausführungsform umfasst die Monomerzusammensetzung ein oder mehrere sonstige monoethylenisch ungesättigte Monomere (d) in einer Menge von 0,1 bis 15 Gew.-Teile bezogen auf die Gesamtmonomere.

Bevorzugte Monomere (d) sind Acrylamid und/oder Methacrylamid (Monomere (d1)).

Weiterhin können sonstige monoethylenisch ungesättigte Monomere (d2), die sich von den Monomeren der Gruppen (a), (b), (c) und (d1) unterscheiden, also weder Styrol, Butadien, Acrylamid, Methacrylamid noch ethylenisch ungesättigte Carbonsäuren sind, eingesetzt werden.

Sonstige monoethylenisch ungesättigte Monomere (d2) werden bevorzugt ausgewählt unter, Acrylnitril, Methacrylnitril, N-Methylolacrylamid, N-Methylol(meth)acrylamid, Vinylestern von gesättigten C₁- bis C₁₈-Carbonsäuren, vorzugsweise Vinylacetat, sowie Estern der Acrylsäure und der Methacrylsäure mit einwertigen C₁- bis C₁₈-Alkoholen wie Methylacrylat, Methylmethacrylat, Ethylacrylat, Ethylmethacrylat, n-Propylacrylat, n-Propylmethacrylat, Isopropylacrylat, Isopropylmethacrylat, n-Butylacrylat, n-Butylmethacrylat, Isobutylacrylat, Isobutylmethacrylat, sec.-Butylacrylat. sec.-Butylmethacrylat, tert.-Butylacrylat, tert.-Butylmethacrylat, Pentylacrylate, Pentylmethacrylate, 2-Ethylhexylacrylat, 2-Ethylhexylmethacrylat, Allylestern gesättigter Carbonsäuren, Vinylethern, Vinylketonen, Dialkylestern ethylenisch ungesättigter Carbonsäuren, N-Vinylpyrrolidon, N-Vinylpyrrolidin, N-Vinylformamid, N,N-Dialkylamonialkylacrylamiden, N,N-Dial-kylaminoalkylmethacrylamiden, N,N-Dialkylaminoalkylacrylaten, N,N-Dialkylaminoalkylmethacrylaten, Vinylchlorid und Vinylidenchlorid und ihre Mischungen.

Besonders bevorzugt werden als Monomere (d2) Acrylnitril und Methacrylnitril.

Der Styrolanteil beträgt 40 bis 75 Gew.-Teile und vorzugsweise 45 bis 70 Gew.-Teile, insbesondere 50 bis 65 Gew.-Teile bezogen auf 100 Gew.-Teile Gesamtmonomere auf sich.

Die Menge Butadien beträgt 24,9 bis 59,9 Gew.-Teile, vorzugsweise 29,9 bis 54,9 Gew.-Teile bezogen auf 100 Gew.-Teile Gesamtmonomere.

Die Gesamtmenge der Monomere (c) beträgt 0,1 bis 10 Gew.-Teile, vorzugsweise 0,1 bis 8 Gew.-Teile oder 1 bis 6 Gew.-Teile bezogen auf 100 Gew.-Teile Gesamtmonomere.

Sofern Monomere (d) enthalten sind, beträgt ihre Gesamtmenge (d1 + d2) bis zu 15 Gew.-Teile, vorzugsweise 0,1 bis 10 Gew.-Teile insbesondere 0,5 bis 6 Gew.-Teile bezogen auf 100 Gew.-Teile Gesamtmonomere.

Bevorzugt polymerisiert man im wässrigen Medium

| | | |
|---|---|---|
| (a) | 40 bis 75 Gew.-Teile | Styrol, |
| (b) | 24,8 bis 59,8 Gew.-Teile | Butadien, |
| (c) | 0,1 bis 10 Gew.-Teile | mindestens einer ethylenisch ungesättigten Carbonsäure und |
| (d1) | 0,1 bis 5 Gew.-Teile | Acrylamid und/oder Methacrylamid, |
| (d2) | 0 bis 10 Gew.-Teile | ein oder mehrere sonstige monoethylenisch ungesättigte Monomere, |

wobei sich die Gewichtsteile der Monomeren (a) bis (d), also (d1) und sofern vorhanden (d2), auf 100 Gew.-Teile aufsummieren.

Sofern es sich um ein bevorzugtes Monomer (d1) handelt, wird es bevorzugt in einer Menge von 0,3 bis 5 Gew.-Teilen und insbesondere von 0,4 bis 3 Gew.-Teilen bezogen auf 100 Gew.-Teile Gesamtmonomer eingesetzt.

Sofern Monomere (d2) enthalten sind, bevorzugt Acrylnitril und/oder Methacrylnitril, werden sie bevorzugt in einer Menge bis höchstens 10 Gew.-Teile insbesondere bis höchstens 7 Gew.-Teile und bevorzugt wenigstens 1, insbesondere wenigstens 3 Gew.-Teilen bezogen auf 100 Gew.-Teile Gesamtmonomer eingesetzt.

Mit Vorteil werden

| | | |
|---|---|---|
| (a) | 45 bis 70 Gew.-Teile | Styrol, |
| (b) | 25 bis 50 Gew.-Teile | Butadien, |
| (c) | 1 bis 8 Gew.-Teile | mindestens einer ethylenisch ungesättigten Carbonsäure, |
| (d1) | 0,3 bis 5 Gew.-Teile | Acrylamid und/oder Methacrylamid, |
| (d2) | 0 bis 10 Gew.-Teile | sonstige monoethylenisch ungesättigte Monomere, |

wobei sich die Gewichtsteile der Monomeren (a) bis (d), also (d1) und sofern vorhanden (d2), auf 100 Gew.-Teile (Gesamtmonomermenge) aufsummieren, polymerisiert.

Insbesondere bevorzugt werden

| | | |
|---|---|---|
| (a) | 50 bis 65 Gew.-Teile | Styrol, |
| (b) | 30 bis 45 Gew.-Teile | Butadien, |
| (c) | 1 bis 6 Gew.-Teile | mindestens einer ethylenisch ungesättigten Carbonsäure, |
| (d1) | 0,4 bis 3 Gew.-Teile | Acrylamid und/oder Methacrylamid, |
| (d2) | 0 bis 10 Gew.-Teile | sonstige monoethylenisch ungesättigte Monomere, |

wobei sich die Gewichtsteile der Monomeren (a) bis (d) auf 100 Gew.-Teile (Gesamtmonomermenge) aufsummieren, polymerisiert.

Die Emulsionspolymerisation erfolgt in einem wässrigen Medium. Hierbei kann es sich z. B. um vollständig entsalztes Wasser handeln oder auch um Mischungen aus Wasser und einem damit mischbaren Lösemittel wie Methanol, Ethanol, Ethylenglykol, Glycerin, Zuckeralkoholen wie Sorbitol oder Tetrahydrofuran. Vrozugsweise handelt es sich um Wasser.

Die Gesamtmenge am wässrigen Medium wird dabei so bemessen, dass die erhaltene wässrige Polymerdispersion einen Feststoffgehalt von bevorzugt ≥59 Gew.-%, besonders bevorzugt 59 bis 65 Gew.-%, insbesondere ≥60 Gew.-% bezogen auf das Gewicht der wässrigen Dispersion aufweist.

Das erfindungsgemäße Verfahren ist ein Monomerzulaufverfahren. Unter Monomerzulaufverfahren versteht man, dass die Hauptmenge, üblicherweise wenigstens 90 Gew-Teile, vorzugsweise wenigstens 93 Gew.-Teile der zu polymerisierende Monomere der Polymerisationsreaktion unter Polymerisationsbedingungen zugeführt werden.

Erfindungsgemäß wird eine Teilmenge der Monomere vor Beginn der Polymerisation im Polymerisationsreaktor vorgelegt (auch als Vorlage bezeichnet). Hierbei kann es sich um ein oder mehrere Monomere der Monomerzusammensetzung handeln. So kann die Polymerisation in dieser Vorlage, die 1 bis 10 Gew.-Teile, vorzugsweise 1 bis 7 Gew.-Teile der Gesamtmonomermenge enthält, initiiert werden und anschließend Monomere und Emulator stetig dosiert werden. Insbesondere werden bis zu 5 Gew.-Teile der Gesamtmonomerzusammensetzung vorgelegt werden und dann die Polymerisation initiiert.

Unter Polymerisationsbedingungen sind dabei generell diejenigen Radikalinitiatormengen, Temperaturen und Drücke zu verstehen, unter denen die radikalisch initiierte wässrige Emulsionspolymerisation nicht zum Stillstand kommt. Die Polymerisation ist dabei prinzipiell abhängig von Art und Menge des verwendeten Radikalinitiators. Die Zusammenhänge zwischen Temperatur und Zerfallsgeschwindigkeit sind dem Fachmann für die gängigen Polymerisationsinitiatoren hinreichend bekannt oder können in Routineexperimenten ermittelt werden.

Erfindungsgemäß werden die Monomere und der Emulgator stetig dosiert. Mit anderen Worten, die Monomerdosierung sowie die Emulgatordosierung erfolgen in einem kontinuierlichen Mengenstrom, also ohne Unterbrechung.

Dabei wird das jeweilige Monomer bevorzugt mit einer Dosierrate dosiert, die nicht mehr als 30 %, vorzugsweise nicht mehr als 20 %, von dem Durchschnittswert des jeweiligen Gesamtzulaufs dieses Monomers abweicht.

Gemäß einer bevorzugten Ausführungsform entspricht die Dosierrate der Monomere (Zunahme der Monomere) in etwa der Polymerisationsrate der Monomere (Abnahme der Monomere).

Gemäß einer Ausführungsform startet die stetige Dosierung der Monomere der Gruppen (a), (b), (c) und sofern vorhanden (d) zeitgleich.

Die Monomere werden in einem stetigen Mengenstrom bevorzugt über einen Zeitraum von mindestens 100 Minuten, besonders bevorzugt über einen Zeitraum von 100 bis 300 Minuten, insbesondere über einen Zeitraum von 150 bis 270 Minuten zudosiert (Gesamtdosierzeit der Monomere).

Unter Emulgator sind im Rahmen des erfindungsgemäßen Verfahrens Emulgierhilfsmittel zu verstehen. Hierunter versteht der Fachmann üblicherweise Emulgierhilfsmittel, die sowohl die Monomertröpfchen als auch Polymerisatteilchen in der wässrigen Phase dispers verteilt halten und so die Stabilität der erzeugten wässrigen Polymerisatdispersion gewährleisten. Als solche kommen die zur Durchführung von radikalischen wässrigen Emulsionspolymerisationen üblicherweise eingesetzten Emulgatoren in Betracht.

Als Emulgatoren kommen grenzflächenaktive Stoffe in Betracht, deren zahlenmittleres Molekulargewicht üblicherweise unterhalb von 2000 g/mol oder vorzugsweise unterhalb von 1500 g/mol liegt.

Als Emulgatoren sind sowohl anionische, kationische als auch nichtionische Emulgatoren geeignet. Vorzugsweise werden als grenzflächenaktive Substanzen Emulgatoren eingesetzt, deren relative Molekulargewichte üblicherweise unterhalb derer von Schutzkolloiden liegen.

Geeignete anionische Emulgatoren sind beispielsweise Alkali- und Ammoniumsalze von Alkylsulfaten (Alkylrest: C₈-C₂₂), von Schwefelsäurehalbestern ethoxylierter Alkanole (EO-Grad: 2 bis 50, Alkylrest: C₁₂-C₁₈) und ethoxylierter Alkylphenole (EO-Grad: 3 bis 50, Alkylrest: C₄-C₉), von Alkylsulfonsäuren (Alkylrest: C₁₂-C₁₈), von Alkylarylsulfonsäuren (Alkylrest: C₉-C₁₈) und von Diestern der Sulfobernsteinsäure mit C₄-C₁₈-Alkanolen. Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208). Als anionische Emulgatoren sind ebenfalls Bis(phenylsulfonsäure)ether bzw. deren Alkali- oder Ammoniumsalze, die an einem oder beiden aromatischen Ringen eine C₄-C₂₄-Alkylgruppe tragen, geeignet. Diese Verbindungen sind allgemein bekannt, z. B. aus der US-A-4,269,749, und im Handel erhältlich, beispielsweise als Dowfax^{®} 2A1 (Dow Chemical Company).

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: C₄-C₁₀), Ethoxylate langkettiger Alkohole (EO-Grad: 3 bis 100, Alkylrest: C₈-C₃₆) sowie Polyethylenoxid/Polypropylenoxid-Homo- und Copolymere. Diese können die Alkylenoxideinheiten statistisch verteilt oder in Form von Blöcken einpolymerisiert enthalten. Gut geeignet sind z. B. EO/PO-Blockcopolymere. Bevorzugt werden Ethoxylate langkettiger Alkanole (Alkylrest C₁-C₃₀, mittlerer Ethoxylierungsgrad 5 bis 100) und darunter besonders bevorzugt solche mit einem linearen C₁₂-C₂₀-Alkylrest und einem mittleren Ethoxylierungsgrad von 10 bis 50 sowie ethoxylierte Monoalkylphenole, eingesetzt.

Bevorzugt wird mindestens ein anionischer und/oder mindestens ein nichtionischer Emulgator eingesetzt.

Bevorzugt wird der Emulgator ausgewählt unter Alkali- und Ammoniumsalzen von C₈-C₂₂-Alkylsulfaten und von Schwefelsäurehalbestern ethoxylierter Alkanole (EO-Grad: 2 bis 40, Alkylrest: C₁₂-C₁₈) und von Schwefelsäurehalbestern ethoxylierter Alkylphenole (EO-Grad: 10 bis 40, Alkylrest: C₄-C₉), und Bis(phenylsulfonsäure)ether bzw. deren Alkali- oder Ammoniumsalze, die an einem oder beiden aromatischen Ringen eine C₄-C₂₄-Alkylgruppe tragen.

Besonders bevorzugt wird eine Mischung aus Emulgatoren eingesetzt, jeweils in Form ihrer Alkali- und Ammoniumsalze, insbesondere eine Mischung von Alkylsulfaten (Alkylrest: C₈-C₂₂) mit Schwefelsäurehalbestern ethoxylierter Alkanole (EO-Grad: 2 bis 40, Alkylrest: C₁₂-C₁₈) oder mit Schwefelsäurehalbestern ethoxylierter Alkylphenole (EO-Grad: 10 bis 40, Alkylrest: C₄-C₉) oder mit Sulfobernsteinsäure-2-ethylhexylester, oder eine Mischung von Alkali- und Ammoniumsalze von Alkylsulfaten mit Bis(phenylsulfonsäure)ether bzw. deren Alkali- oder Ammoniumsalze, die an einem oder beiden aromatischen Ringen eine C₄-C₂₄-Alkylgruppe tragen (z.B. Dowfax 2A1 der Fa Dow Chemical Company).

Besonders bevorzugt wird eine Emulgatormischung aus Natriumlaurylsulfat und ethoxyliertem Natriumlaurylethersulfat sowie eine Mischung aus Natriumlaurylsulfat und Dowfax^{®} 2A1 gewählt.

Die stetige Dosierung von Emulgator und Monomer kann dabei in getrennten Mengenströmen erfolgen. Es ist jedoch vorteilhaft mindestens einen Emulgator und mindestens ein Monomer zusammen als Mischung zu dosieren. Es werden bevorzugt 0,1 bis 5 Gew.-Teile, bevorzugt 0,2 bis 2,0 Gew.-Teile Emulgator bezogen auf 100 Gew.-Teile Monomere in Mischung mit mindestens einem Monomer stetig dosiert.

Dabei werden Emulgatoren bevorzugt mit einer Dosierrate dosiert, die nicht mehr als 30 %, vorzugsweise nicht mehr als 20 %, von dem Durchschnittswert des jeweiligen Gesamtzulaufs abweicht.

Erfindungsgemäß wird anschließend an eine Periode P1, wenn 40 bis 55 % der Gesamtdosierzeit der Monomere verstrichen ist und 40 bis 55 % der zuzudosierenden Monomermenge zudosiert sind, die Dosierrate des Emulgators für eine Dauer von längstens 30 Minuten auf das 10 bis 150-fache der Durchschnittsdosierrate des Emulgators der Periode P1 erhöht. Die Periode P1 startet mit Beginn der stetigen Dosierung der Monomere, also nach der Initiierung der Polymerisation in der Vorlage, und endet, wenn 40 bis 55 %, bevorzugt 45 bis 50 % der Gesamtdosierzeit der Monomere verstrichen ist und 40 bis 55 Gew.-Teile, der zuzudosierenden Monomermenge zudosiert sind, wobei die Dosierung so gewählt wird, dass beide Bedingungen erfüllt werden.

Die sich an die Periode P1 anschließende "Periode der erhöhten Dosierung" wird nachfolgend auch als "P2" bezeichnet. Bevorzugt beträgt die Dauer der Periode P2 bis zu 25 Minuten, insbesondere 5 bis 20 Minuten. Aufgrund der erhöhten Dosierrate während der Periode P2 wird diese zusätzliche Emulgatordosierung auch als "Emulgatorschuss" bezeichnet.

Im Anschluss an die Periode P2 folgt eine Periode P3 in der die Dosierrate des Emulgators bis zu 20 % von der Dosierrate des Emulgators der Periode P1 nach oben oder unten abweichen kann.

Erfindungsgemäß wird anschließend an diese Periode P3, wenn 60 bis 85 % der Gesamtdosierzeit der Monomere verstrichen ist und 60 bis 85 Gew-Teile der zuzudosierenden Monomermenge zudosiert sind, die Dosierrate des Emulgators für eine Dauer von längstens 30 Minuten auf das 10 bis 150-fache der Durchschnittsdosierrate des Emulgators der Periode P1 erhöht. Die sich an die Periode P3 anschließende "Periode der erhöhten Dosierung" wird nachfolgend auch als "P4" bezeichnet.

Im Anschluss an die Periode P4 folgt eine Periode P5 in der die Dosierrate des Emulgators bis zu 20 % von der Dosierrate des Emulgators der Periode P1 nach oben oder unten abweichen kann.

Bevorzugt beträgt während der Periode P2 sowie der Periode P4 die Dosierrate des Emulgators das 20 bis 90-fache der Durchschnittsdosierrate des Emulgators der Periode P1.

Der während der Periode P1, P3 und P5 eingesetzte Emulgator bzw. die eingesetzte Emulgatormischung ist in der Regel derselbe. Der Emulgator der Periode P2 sowie der Periode P4 kann derselbe Emulgator wie in der Periode P1 sein. Sofern in Periode P1 eine Mischung eingesetzt wird, kann in Periode P2 bzw. P4 auch jeweils nur die Menge eines der Emulgatoren erhöht werden. Bevorzugt wird in der Periode P2 sowie in der Periode P4 eine Mischung der Emulgatoren der Periode P1 eingesetzt jedoch mit einem geänderten Mengenverhältnis, beispielsweise indem nur einer von zwei Emulgatoren als "Emulgatorschuss" zusätzlich dosiert wird.

Gemäß einer bevorzugten Ausführungsform wird ein Monomer/Emulgatorgemisch über den gesamten Zulauf, also die Periode P1 bis P5 stetig dosiert und zusätzlich in der Periode P2 und P4 die Dosierrate eines der Emulgatoren des Gemisches erhöht.

Bevorzugt wird als Emulgator der Periode P2 und P4 unabhängig voneinander ein anionischer Emulgator gewählt insbesondere ausgewählt unter Laurylsulfat, Schwefelsäurehalbestern ethoxylierter Alkanole und Arylsulfonat.

Nachfolgend wird die Dosierung beispielhaft für eine Polymerisation mit Initiierung in einer Vorlage und anschließender Monomerdosierung mit gleichbleibendem Mengenstrom erläutert. In Beispiel 1 wird in der Vorlage die Polymerisation mit 3 Gew.-Teilen der Gesamtmonomermenge initiiert und dann die stetige Dosierung einer Mischung aus Monomer und Emulgator gestartet. Die Gesamtmenge aller Monomere inklusive der Monomere der Vorlage sind 100 Gew.-Teile (im Rahmen dieser Anmeldung auch als Gesamtmonomermenge bezeichnet). Es werden somit 97 Gew.-Teile stetig zudosiert (zuzudosierende Monomermenge). Die Gesamtdauer der Monomerdosierung beträgt 240 Minuten. Nach 129 Minuten gerechnet ab Beginn der stetigen Dosierung wird eine zusätzliche Dosierung des Emulgators gestartet, die 12 Minuten andauert. Die Erhöhung der Emulgatormenge, der sogenannte Emulgatorschuss, erfolgt somit nach 52 % der Gesamtdosierzeit der Monomere. Nach den 129 Minuten sind aufgrund der konstanten Monomerdosierung 54 Gew.-Teile Monomere zudosiert. Über die Gesamtdosierzeit von 240 Minuten werden 1,05 Gew.-Teile Emulgator bezogen auf 100 Gew.-Teile Gesamtmonomer in Mischung mit den Monomeren stetig dosiert. Entsprechend sind nach 129 Minuten 0,564 (pphm) Gew.-Teile Emulgator zudosiert. Dies entspricht einer Durchschnittsdosierrate der Periode P1 von 0,004372 Gew.-Teilen/min. Die Dosierung des Emulgators während des ersten "Emulgatorschusses" beträgt 0,68 Gew.-Teile über einen Zeitraum von 12 Minuten, also eine Dosierrate von 0,056 Gew.-Teile/min. Damit werden während des Emulgatorschusses 0,0603 Gew.-Teile/pro Minute dosiert und damit beträgt die Dosierrate das 13-fache (gerundet, exakt: 13,8-fache) der Durchschnittsdosierrate des Emulgators. Analog ist der Beginn des zweiten "Emulgatorschusses" nach 200 Minuten und damit nach 83 % der Gesamtdosierzeit der Monomere und nachdem 86 % der zuzudosierenden Monomermenge dosiert wurden. Die Dosierung des Emulgators während des zweiten "Emulgatorschusses" beträgt 0,5 Gew.-Teile über einen Zeitraum von 1 Minute, also eine Dosierrate von 0,5 Gew.-Teile/min. Damit werden während des Emulgatorschusses 0,556 Gew.-Teile/pro Minute dosiert und damit beträgt die Dosierrate das 127-fache der Durchschnittsdosierrate des Emulgators.

Es wird angenommen, dass die im Polymerisationsgemisch vorliegende Emulgatorkonzentration während der Periode P1 unterhalb der kritischen Mizellenkonzentration ist, und während der Perioden P2 und P4 oberhalb der kritischen Mizellenkonzentration ist. Nach dieser Theorie würden sich in der Periode P2 und P4 neue Mizellen bilden und jeweils ein weiteres Teilchenwachstum würde gestartet. Insofern wären aufgrund der zweimaligen erhöhten Emulgatorzugabe eine Teilchengrößenverteilung mit drei Maxima zu erwarten. Da jedoch die zweite Zugabe zu einem relativ späten Zeitpunkt bezogen auf die zuzudosierende Monomermenge geschieht, ist die dritte Population vermutlich nur wenig ausgeprägt, so dass man in einigen Fällen nur zwei Maxima bei einer Bestimmung mittels der analytischen Ultrazentrifuge (AUZ) beobachtet.

Bei dem erfindungsgemäßen Verfahren verwendet man Radikalinitiatoren (auch als radikalische Polymerisationsinitiatoren bezeichnet) also Initiatoren, die unter den Reaktionsbedingungen Radikale bilden. Es kann sich dabei sowohl um Peroxide, als auch um Azoverbindungen handeln. Selbstverständlich kommen auch Redoxinitiatorsysteme in Betracht.

Als Peroxide können prinzipiell anorganische Peroxide und/oder organische Peroxide eingesetzt werden. Als anorganische Peroxide eignen sich beispielsweise Wasserstoffperoxid sowie Peroxodisulfate, wie die Mono- oder Di-Alkalimetall- oder Ammoniumsalze der Peroxodischwefelsäure, beispielsweise deren Mono- und Di-Natrium-, -Kalium- oder Ammoniumsalze. Als organische Peroxide eignen sich beispielsweise Alkylhydroperoxide wie tert.-Butylhydroperoxid, Arylhydroperoxide wie p-Menthyl- oder Cumolhydroperoxid, sowie Dialkyl- oder Diarylperoxide, wie Di-tert.-Butyl-, Dibenzoyl- oder Di-Cumolperoxid.

Redoxinitiatorsysteme sind kombinierte Systeme, die aus wenigstens einem organischen oder anorganischen Reduktionsmittel und wenigstens einem Peroxid zusammengesetzt sind. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Acetonbisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Bevorzugte Radikalinitiatoren sind anorganische und organische Peroxide bevorzugt Ammonium- oder Alkalimetallsalze von Peroxosulfaten oder Peroxodisulfaten, sowie tert.-Butyl-, p-Mentyl- und Cumylhydroperoxid, insbesondere ausgewählt unter Natrium- und Kaliumperoxodisulfat, tert.-Butylhydroperoxid und Cumylhydroperoxid. Besonders bevorzugt werden dabei sowohl mindestens ein anorganisches Peroxid bevorzugt Peroxodisulfat, insbesondere Natriumperoxodisulfat, und ein organisches Peroxid bevorzugt Alkylhydroperoxid, insbesondere t-Butylhydroperoxid verwendet.

Die Polymerisation erfolgt in der Regel unter Einsatz von 0,1 bis 5 Gew.-Teilen des Radikalinitiators, vorzugsweise 0,5 bis 4 Gew.-Teilen des Radikalinitiators, vorzugsweise mindestens eines anorganischen und/oder organischen Peroxids, bezogen auf 100 Gew.-Teile Gesamtmonomere.

Unter Initiierung der Polymerisationsreaktion wird der Start der Polymerisationsreaktion der im Polymerisationsgefäß vorliegenden Monomeren durch Zerfall des Radikalinitiators verstanden. Die Polymerisation startet beispielsweise, wenn das Polymerisationsgemisch Monomere und anorganisches Peroxid enthält und eine Temperatur im Bereich von ≥ 80°C bis ≤95°C erreicht.

Beispielsweise bereitet man, um die Polymerisation zu starten, zunächst eine wässrige Mischung, die eine Teilmenge Schutzkolloid und/oder einen Emulgator in gelöster Form, eine Teilmenge Monomer, sowie den Saatlatex enthält. Diese Mischung wird auf eine Temperatur oberhalb der Zerfallstemperatur des Radikalinitiators erwärmt und eine Teilmenge des Radikalinitiators dosiert. Nach einer Zeitspanne von 1 bis 15 Minuten, vorzugsweise 1 bis 10 Minuten nach Zugabe des Radikalinitiators beginnt man mit dem Dosieren der Monomere. Vorteilhaft wird eine weitere Teilmenge Radikalinitiators, vorzugsweise anorganisches Peroxid, zeitgleich mit den Monomeren dosiert.

Wie bei allen radikalischen Polymerisationsreaktionen ist es vorteilhaft, wenn die Vorlage der Reaktionskomponenten, die Dosierung/Polymerisation sowie die Nachreaktion im Reaktionsgefäß unter Inertgasatmosphäre, beispielsweise unter Stickstoff- oder Argonatmosphäre, erfolgt.

Bevorzugte Polymerisationsbedingungen sind eine Temperatur im Bereich von ≥ 80°C bis ≤ 115°C, bevorzugt ≥ 85°C bis ≤ 110°C, insbesondere ≥ 90°C bis ≤ 105°C.

Die Dosierung des konjugierten aliphatischen Diens erfolgt in der Regel bei erhöhtem Druck. Die Dosierung des konjugierten aliphatischen Diens, findet bevorzugt bei einem Druck im Bereich von 5 bis 15 bar statt. Der erhöhte Druck bewirkt, dass sich beispielsweise das bei Normaldruck und Raumtemperatur gasförmige 1,3-Butadien weitgehend im Polymerisationsgemisch befindet.

Die Polymerisation kann in Gegenwart einer abgebauten Stärke durchgeführt werden. Gemäß einer bevorzugten Ausführungsform findet die Polymerisation in Gegenwart einer abgebauten Stärke, bevorzugt in Gegenwart von 15 bis 100 Gew.-Teile einer abgebauten Stärke bezogen auf 100 Gew.-Teile Gesamtmonomere. Abgebaute Stärken sind allgemein bekannt und beispielsweise in der WO2020/249406 auf den Seiten 15 bis Seite 16, Zeile 2 beschrieben.

Bevorzugt werden abgebaute native Stärken, insbesondere zu Maltodextrin abgebaute native Stärken.

Bevorzugt werden abgebauten Stärken mit einer intrinsischen Viskosität ηi von ≤0,07 dl/g oder ≤0,05 dl/g. Die intrinsische Viskosität ηi der abgebauten Stärken liegt vorzugsweise in dem Bereich von 0,02 bis 0,06 dl/g. Die intrinsische Viskosität ηi wird bestimmt gemäß DIN EN1628 bei einer Temperatur von 23 °C.

Gemäß einer weiteren bevorzugten Ausführungsform ist während der Polymerisation keine abgebaute Stärke zugegen.

Erfindungsgemäß wird die Polymerisation in Gegenwart eines Saatlatex - auch als Saatpolymer bezeichnet - durchgeführt.

Unter einem Saatlatex versteht der Fachmann üblicherweise eine Polymerdispersion, deren Saat-Teilchen im Polymerisationsverfahren als Zentren der Teilchenbildung fungieren.

Gemäß einer bevorzugten Verfahrensvariante wird als Saatlatex eine wässrigen Polymerdispersion mit einer gewichtsmittleren Teilchengröße D_{w}50 im Bereich von 20 bis 60 nm und einem Verhältnis D_{w}50/ Dₙ50 ≤ 2 eingesetzt.

Unter gewichtsmittlerem Teilchendurchmesser wird in dieser Schrift der nach der Methode der Analytischen Ultrazentrifuge ermittelte gewichtsmittlere D_{w}50- Wert verstanden, und unter zahlenmittlerem Teilchendurchmesser der nach derselben Methode ermittelte zahlenmittlere D_{N}50-Wert verstanden (vgl. hierzu S.E. Harding et al., Analytical Ultracentrifugation in Biochemistry 5 and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175). Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser D_{w}50 und zahlenmittleren Teilchendurchmesser D_{N}50 [D_{w}50/ D_{N}50] kleiner oder gleich 2,0, bevorzugt kleiner oder gleich 1,5 und insbesondere bevorzugt kleiner oder gleich 1,2 oder kleiner oder gleich 1,1 ist.

Die Herstellung eines Saatlatex ist dem Fachmann bekannt und erfolgt in der Regel in Gegenwart einer großen Emulgatormenge, was kleine Teilchengrößen und eine enge Teilchengrößenverteilung zur Folge hat. Es wird im Allgemeinen beobachtet, dass Polymerisationen, die in Gegenwart eines solchen exogenen Saatlatex - im Gegensatz zu einem in-situ-Saatlatex - durchgeführt werden, sich durch ein gleichförmiges Teilchenwachstum auszeichnen. Der Saatlatex wird, wie bereits der Name sagt, üblicherweise in Form einer wässrigen Dispersion eingesetzt.

Der Saatlatex ist vorzugsweise ein Styrolpolymer und/oder Methylmethacrylatpolymer mit einer Glasübergangstemperatur ≥ 50 °C, ≥ 60 °C, ≥70 °C, ≥80 °C oder ≥90°C, gemessen nach DIN EN ISO 11357-2 (2013-09).

Bevorzugt setzt man 0,01 bis 2 Gew.-Teile, insbesondere 0,02 bis 1 Gew.-Teile Saatlatex (gerechnet als Feststoff) bezogen auf Gesamtmonomere ein.

Bevorzugt wird die Polymerisation in einer Vorlage, die bis zu 2 Gew.-Teile wässrigen Dispersion von eines Polystyrolsaatlatex bezogen auf 100 Gew.-Teile Gesamtmonomere enthält, initiiert und anschließend Monomere und Emulator stetig dosiert.

Um die Eigenschaften der Polymeren zu modifizieren, kann man die Emulsionspolymerisation gegebenenfalls in Gegenwart mindestens eines Kettenübertragungsmittels durchführen. Sie werden üblicherweise eingesetzt, um das Molekulargewicht der durch eine radikalisch wässrige Emulsionspolymerisation zugänglichen Polymerisate zu reduzieren bzw. zu kontrollieren.

Zur Einstellung der gewichtsmittleren Molekulargewichte der gebildeten Polymeren können radikalkettenübertragende Verbindungen (Radikalkettenregler) eingesetzt werden. Dabei kommen im Wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, Mercaptoalkansäure und deren Derivate, wie 3-Mercaptopropionsäure-6-methylheptylester oder 2-Mercaptoethansäure-2-ethylhexylester sowie alle weiteren im Polymerhandbook 3rd edtition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan, Vinylcyclohexan oder Terpinolen oder Kohlenwasserstoffe mit leicht abstrahierbaren Wasserstoffatomen, wie beispielsweise Toluol, zum Einsatz. Es ist aber auch möglich, Gemische sich nicht störender vorgenannter Radikalkettenregler einzusetzen.

Falls man bei der Polymerisation kettenübertragenden Verbindungen, einsetzt, so beträgt die jeweils verwendete Menge beispielsweise 0,01 bis 5, vorzugsweise 0,1 bis 3 Gew.-Teile, bezogen auf 100 Gew.-Teile der bei der Polymerisation eingesetzten Monomere.

Erfindungsgemäß kann die Gesamtmenge des Radikalkettenreglers im wässrigen Reaktionsmedium vor Initiierung der Polymerisationsreaktion vorgelegt werden. Es ist aber auch möglich, gegebenenfalls lediglich eine Teilmenge des Radikalkettenreglers im wässrigen Reaktionsmedium vor Initiierung der Polymerisationsreaktion vorzulegen und dann unter Polymerisationsbedingungen während der radikalisch initiierten Emulsionspolymerisation die Gesamtmenge bzw. die gegebenenfalls verbliebene Restmenge nach Bedarf kontinuierlich oder diskontinuierlich zuzugeben.

Um die Polymerisationsreaktion zu vervollständigen, reicht es in den meisten Fällen, das Reaktionsgemisch nach Beendigung der Monomerzugabe noch beispielsweise 0,5 bis 3 Stunden bei der Polymerisationstemperatur zu rühren. Üblicherweise hat man anschließend einen Umsatz von um die 95% erreicht.

Um den Umsatz noch weiter zu erhöhen und damit den Restmonomergehalt zu senken, kann man beispielsweise weiteren Radikalinitiator aus der Gruppe der oben genannten Initiatoren zum Reaktionsgemisch zugeben bzw. deren Zugabe verlängern und eine sogenannte "Nachpolymerisation", also eine Polymerisation durchzuführen, um Umsätze >95% bis zu 99% zu erzielen.

Eine solche Nachpolymerisation kann bei gleicher, niedrigerer oder auch höherer Temperatur wie die Hauptpolymerisation durchgeführt werden. Beispielsweise dosiert man in dieser Phase 0,1 bis 1,5 Gew.-Teile, bezogen auf 100 Gew.-Teile der bei der Polymerisation eingesetzten Monomere, an anorganischem Peroxid, bevorzugt Natriumperoxodisulfat, als Initiator zu und stellt die Polymerisationstemperatur auf eine Temperatur im Bereich von 80 bis 120 °C ein.

Der pH-Wert kann während der Polymerisation beispielsweise 1 bis 5 betragen. Nach Ende der Polymerisation bei einem Umsatz >95% wird der pH-Wert beispielsweise auf einen Wert zwischen 6 und 7 eingestellt.

Weiterhin kann auch eine chemische Desodorierung durchgeführt werden. Sofern noch Spuren von Restmonomeren entfernt werden sollen, kann dies auch chemisch durch unter Einwirkung von obengenannten Redoxinitiatorsystemen und Systemen wie sie in der DE-A 44 35 423, DE-A 44 19 518 sowie in der DE-A 44 35 422 aufgeführt sind, erfolgen.

Die Behandlung mit dem Redoxinitiatorsystem wird im Temperaturbereich von 60 bis 115°C, vorzugsweise bei 80 bis 100°C durchgeführt. Die Redoxpartner können der Dispersion unabhängig voneinander vollständig, portionsweise oder stetig über einen Zeitraum von 10 Minuten bis 4 Stunden zugegeben werden. Zur Verbesserung der Nachpolymerisationswirkung der Redoxinitiatorsysteme können der Dispersion auch lösliche Salze von Metallen wechselnder Wertigkeit, wie Eisen-, Kupfer oder Vanadium-salze, zugesetzt werden. Häufig werden auch Komplexbildner zugegeben, die die Metallsalze unter den Reaktionsbedingungen in Lösung halten.

Im Anschluss an die Polymerisationsreaktion (Hauptpolymerisation + Nachpolymerisation) und gegebenenfalls chemischer Desodorierung kann es erforderlich sein, die wässrigen Polymerdispersionen weitgehend frei von Geruchsträgern, wie Restmonomeren und anderen organischen flüchtigen Bestandteilen zu gestalten, was auch als physikalische Desodorierung bezeichnet wird. Dies kann in an sich bekannter Weise physikalisch durch destillative Entfernung (insbesondere über Wasserdampfdestillation) oder durch Abstreifen mit einem inerten Gas erreicht werden.

Auch offenbart sind die nach dem erfindungsgemäßen Verfahren erhältlichen Dispersionen die einen Feststoffgehalt von ≥58 Gew.-% aufweisen und eine Viskosität nach Brookfield von < 1000 mPas bei 100 U/min gemessen mit Spindel 3 bei 23°C haben.

Diese zeichnen sich dadurch aus, nahezu koagulatfreie wässrige Dispersionen zu sein. Die Menge an Koagulat liegt im ppm-Bereich und beträgt vorzugsweise weniger als 2000 ppm, insbesondere weniger als 1000 ppm.

Weiterhin weisen die Polymerdispersionen bevorzugt einen Feststoffgehalt von ≥59 % Gew.-%, besonders bevorzugt ≥60 % Gew.-%, bevorzugt im Bereich von 59 bis 65 Gew.-% bezogen auf das Gewicht der wässrigen Polymerdispersion auf.

Die erfindungsgemäß erhaltenen Polymerdispersionen weisen gemessen mittels AUZ eine multimodale Teilchengrößenverteilung auf. Der Begriff "multimodal" ist dem Fachmann bekannt und bezeichnet eine Teilchengrößenverteilung einer Dispersion mit zwei und mehr Maxima über die gesamte Teilchengrößenkurve (Gew.-% oder Intensität = y-Achse; Teilchengröße = x-Achse). Allerdings ist für einige Ausführungsformen der Dispersionen zu beobachten, dass sich die Teilchengrößenverteilungen derart überlagern, dass es zu einer sehr breiten Teilchengrößenverteilungskurve ohne erkennbare Maxima (breite Gaußsche Verteilungskurve) kommt, so dass diese ebenfalls als eine multimodale Polymerdispersion angesehen werden.

Die wässrigen Polymerdispersionen werden als Bindemittel, Klebstoff Schlichtemittel für Fasern, zur Herstellung von Überzügen oder zur Herstellung von Papierstreichmassen verwendet. Die wässrigen Polymerdispersionen eignen sich sowohl zum Schlichten von Textilfasern und auch zum Schlichten von Mineralfasern, insbesondere Glasfasern. Aufgrund ihrer guten Klebkraft, insbesondere bei Verwendung von Comonomeren, welche zu einer niedrigen Glasübergangstemperatur des Copolymers (z. B. kleiner 20°C) führen, kann man sie außerdem als Klebstoff zum Beispiel zur Herstellung von Laminaten und zur Herstellung von Überzügen wie zum Beispiel Barrierebeschichtungen verwenden. Bevorzugt werden die wässrigen Polymerdispersionen als Bindemittel in Papierstreichmassen eingesetzt.

Offenbart ist daher auch eine Papierstreichmasse, enthaltend
(i) anorganisches Pigment und
(ii) eine oben beschriebene, nach dem erfindungsgemäßen Verfahren erhältliche wässrige Polymerdispersion
(iii) und gegebenenfalls weitere Hilfsstoffe.

Papierstreichmassen enthalten neben Wasser im allgemeinen Pigmente, Bindemittel und Hilfsstoffe zur Einstellung der erforderlichen rheologischen Eigenschaften, z. B. Verdicker. Die Pigmente sind üblicherweise in Wasser dispergiert. Die Papierstreichmasse enthält Pigmente in einer Menge von vorzugsweise mindestens 80 Gew.-%, z. B. 80 bis 95 Gew.-% oder 80 bis 90 Gew.-%, bezogen auf den Gesamtfeststoffgehalt.

In Betracht kommen insbesondere Weißpigmente. Geeignete Pigmente sind beispielsweise Metallsalzpigmente wie z.B. Calciumsulfat, Calciumaluminatsulfat, Bariumsulfat, Magnesiumcarbonat und Calciumcarbonat, wovon Carbonatpigmente, insbesondere Calciumcarbonat bevorzugt sind. Das Calciumcarbonat kann gemahlenes Calciumcarbonat (GCC, natural ground calcium carbonate), ausgefälltes Calciumcarbonat (PCC, precipitated calcium carbonate), Kalk oder Kreide sein. Geeignete Calciumcarbonatpigmente sind z.B. verfügbar als Covercarb^{®} 60, Hydrocarb^{®} 60 oder Hydrocarb^{®} 90 ME. Weitere geeignete Pigmente sind z.B. Kieselsäuren, Aluminiumoxide, Aluminiumhydrat, Silikate, Titandioxid, Zinkoxid, Kaolin, Tonerde, Talkum oder Siliziumdioxid. Geeignete weitere Pigmente sind z.B. verfügbar als Capim^{®} MP 50 (Clay), Hydragloss^{®} 90 (Clay) oder Talcum C10.

Die Papierstreichmasse enthält die erfindungsgemäß hergestellte Polymerdispersion als alleiniges Bindemittel oder in Kombination mit weiterem Bindemittel. Die wichtigsten Aufgaben von Bindemitteln in Papierstreichmassen sind, die Pigmente an das Papier und die Pigmente untereinander zu verbinden und teilweise Hohlräume zwischen Pigmentpartikeln aufzufüllen.

Auf 100 Gew.-Teile Pigmente verwendet man beispielsweise 1 bis 50 Gew.-Teile, vorzugsweise 1 bis 25 Gew.-Teile oder 5 bis 20 Gew.-Teile des erfindungsgemäßen Polymers (fest, d.h. ohne Wasser oder sonstige bei 21 °C, 1 bar flüssige Lösemittel).

Bevorzugt wird eine Papierstreichmasse, die die Polymerisate der wässrigen Polymerdispersion in einer Menge von 1 bis 50 Gew.-Teilen, bezogen auf die Gesamtmenge an Pigmenten, sowie Pigmente in einer Menge von 80 bis 95 Gewichtsteilen, bezogen auf den Gesamtfeststoffgehalt, sowie einen Hilfsstoff enthält, und deren Pigment ausgewählt sind aus der Gruppe bestehend aus Calciumsulfat, Calciumaluminatsulfat, Bariumsulfat, Magnesiumcarbonat, Calciumcarbonat, Kieselsäuren, Aluminiumoxide, Aluminiumhydrat, Silikaten, Titandioxid, Zinkoxid, Kaolin, Tonerde, Talkum und Siliziumdioxid und deren Hilfsstoff ausgewählt wird aus der Gruppe bestehend aus Verdickern, weiteren polymeren Bindemitteln, Co-Bindemitteln, optischen Aufhellern, Füllstoffen, Verlaufshilfsmitteln, Dispergatoren, Tensiden, Gleitmitteln, Neutralisationsmitteln, Entschäumern, Entlüftungsmitteln, Konservierungsmitteln und Farbstoffen.

Die weiteren, von den erfindungsgemäß hergestellten Polymerisaten verschiedenen, synthetischen Bindemittel sind allgemein bekannt und werden beispielsweise in D. Urban und K. Takamura, Polymer Dispersions and Their Industrial Applications, 2002, Wiley-VCH Verlag GmbH, Weinheim, Kap. 4.4.4 Seite 90 ff. beschrieben, auf dessen Offenbarung ausdrücklich Bezug genommen wird.

Als weitere Bindemittel in Betracht kommen Bindemittel auf natürlicher Basis, insbesondere Bindemittel auf Stärkebasis sowie von den erfindungsgemäß hergestellten Polymerisaten verschiedene, synthetische Bindemittel, insbesondere durch Emulsionspolymerisation herstellbare Emulsionspolymerisate. Unter Bindemitteln auf Stärkebasis soll in diesem Zusammenhang jegliche native, modifizierte oder abgebaute Stärke verstanden werden. Native Stärken können aus Amylose, Amylopektin oder deren Gemischen bestehen. Bei modifizierten Stärken kann es sich um oxydierte Stärke, Stärkeester oder Stärkeether handeln. Durch Hydrolyse kann das Molgewicht der Stärke verringert werden (abgebaute Stärke). Als Abbauprodukte kommen Oligosaccharide oder Dextrine in Betracht. Bevorzugte Stärken sind Getreide-, Mais- und Kartoffelstärke. Besonders bevorzugt sind Getreide- und Maisstärke, ganz besonders bevorzugt Maisstärke.

Die Papierstreichmassen können zusätzlich weitere Hilfsstoffe enthalten, z.B. Füllstoffe, Co-Bindemittel und Verdicker zur weiteren Optimierung von Viskosität und Wasserretention, optische Aufheller, Dispergatoren, Tenside, Gleitmittel (z.B. Calciumstearat und Wachse), Neutralisationsmittel (z.B. NaOH oder Ammoniumhydroxid) zur pH-Werteinstellung, Entschäumer, Entlüftungsmittel, Konservierungsmittel (z.B. Biocide), Verlaufshilfsmittel, Farbstoffe (insbesondere lösliche Farbstoffe) etc. Als Verdicker kommen neben synthetischen Polymerisaten (z.B. vernetztes Polyacrylat), insbesondere Cellulosen, vorzugsweise Carboxymethylcellulose in Betracht. Optische Aufheller sind z.B. Fluoreszens- oder Phosphoreszensfarbstoffe, insbesondere Stilbene.

Es handelt sich vorzugsweise um eine wässrige Papierstreichmasse; sie enthält Wasser insbesondere bereits durch die Zubereitungsform der Bestandteile (wässrige Polymerdispersionen, wässrige Pigment-Slurries); die gewünschte Viskosität kann durch Zugabe von weiterem Wasser eingestellt werden. Übliche Feststoffgehalte der Papierstreichmassen liegen im Bereich von 30 bis 80 Gew.-%. Der pH-Wert der Papierstreichmasse wird vorzugsweise auf Werte von 6 bis 11, insbesondere 7 bis 10 eingestellt.

Offenbart ist auch mit eine Papierstreichmasse beschichtetes Papier oder Karton sowie ein Verfahren zum Streichen von Papier oder Karton, wobei
- eine wässrige Polymerdispersion erfindungsgemäß hergestellt wird; und
- mit dieser Polymerdispersion, mindestens einem Pigment und optionalen weiteren Hilfsstoffe eine Papierstreichmasse hergestellt wird; und die Papierstreichmasse auf mindestens eine Oberfläche von Papier oder Karton aufgebracht wird.

Die Papierstreichmasse wird vorzugsweise auf unbeschichtete Rohpapiere oder unbeschichteten Karton aufgetragen. Die Menge beträgt im Allgemeinen 1 bis 50 g, vorzugsweise 5 bis 30 g (fest, d. h. ohne Wasser oder sonstige bei 21 °C, 1 bar flüssige Lösemittel) pro Quadratmeter. Die Beschichtung kann durch übliche Auftragsverfahren erfolgen, z.B. mittels Leimpresse, Filmpresse, Bladecoater, Luftbürste, Rakel, Vorhangstreichverfahren (curtain coating) oder Spray-Coater. Je nach Pigmentsystem können die wässrigen Dispersionen der wasserlöslichen Copolymere in Papierstreichmassen für den Grundstrich und/oder für den Deckstrich verwendet werden.

Die offenbarten Papierstreichmassen haben gute anwendungstechnische Eigenschaften. Sie haben ein gutes Laufverhalten in Papierbeschichtungsverfahren und eine hohe Bindekraft. Die beschichteten Papiere und Kartone haben eine gute Oberflächenfestigkeit, insbesondere eine sehr hohe Nass- und Trockenrupffestigkeit. Sie sind in den üblichen Druckverfahren, wie Hochdruck, Tiefdruck, Offsetdruck, Digitaldruck, Inkjet-Druck, Flexodruck, Zeitungsdruck, Buchdruck, Sublimationsdruck, Laserdruck, elektrophotographischer Druck oder einer Kombination dieser Druckverfahren gut bedruckbar.

### Beispiele

Sofern sich aus dem Zusammenhang nichts anderes ergibt, bedeuten die Angaben in Prozent immer Gewichtsprozent. Die Angabe eines Gehalts bezieht sich auf den Gehalt in wässriger Lösung oder Dispersion. Wenn im Rahmen der Beispiele Wasser eingesetzt wurde, wurde demineralisiertes Wasser verwendet.

### Messmethoden

### Teilchengröße:

Die Teilchengröße der Teilchen der Polymerdispersion sowie die Teilchengrößenverteilung wurden mittels analytischer Ultrazentrifuge (AUZ) bestimmt mit Trübungsoptik und Mie-Korrektur für transmittierte Intensitäten pro Größe. Es werden mit Trübungsdetektion alle Komponenten von 30 nm bis 5 µm Durchmesser vermessen.

Das Verfahren verwendet eine homogene Startsedimentation. Das Verfahren wurde gemäß der Richtlinien ISO 13318-1 durchgeführt, wobei das spezifische Setup in W. Mächtle, L. Börger, "Analytical Ultracentrifugation of Polymers and Nanoparticles" Kapitel 3, Springer Science und Business Media, Berlin 2006, Kapitel 3 beschrieben wird. Die Auswertung geht von einer kugelförmigen, festen Partikelform der Skelettdichte (skeletal density) aus, die durch die Comonomerzusammensetzung gegeben ist. Die Ergebnisse werden in Volumenmetrik in kugeläquivalenten Durchmessern angegeben.

Für die Messung werden die Dispersionen auf eine Konzentration von 4 g (fest)/Liter mit einer 0,05 gew.-%igen wässrigen Tensidlösung verdünnt und unter den gleichen Bedingungen vermessen.

Der Gewichtsanteil einer Teilchenpopulation ergibt sich direkt aus dem Integral aus der Messung.

Bestimmung der Viskosität der Dispersion:
Die Viskosität der Dispersion wurde gemäß ASTM D2196 mit einem Brookfield Viskometer mit RV Spindel 3 bei 100 UpM und einer Temperatur von 23°C bestimmt.

### Feststoffgehalt:

Feststoffgehalte der Polymerdispersionen wurden bestimmt, indem 0,5 bis 1,5 g der Polymerdispersion in einer Blechdeckel mit 4 cm Durchmesser verteilt wurde und anschließend in einem Umlufttrockenschrank bei 140°C 30 Minuten getrocknet wurde. Das Verhältnis der Masse der Probe nach Trocknung unter obigen Bedingungen zur Masse bei der Probenahme ergibt den Feststoffgehalt der Polymerdispersion.

In den Beispielen wurden folgende Einsatzstoffe verwendet:

| | |
|---|---|
| Emulgator A: | Natriumlaurylsulfat in Form einer 15 gew.-%igen Lösung (Disponil^{®} SDS der Fa. BASF) |
| Emulgator B: | ethoxiliertes Natriumlaurylethersulfat in Form einer 28 gew.-%igen Lösung (Texapon^{®} NSO P der Fa. BASF) |
| Komplexbildner: | EDTA in Form einer 2 gew.-%igen Lösung (Trilon^{®} BX der Fa. BASF) |
| Saatlatex: | Polystyrolsaat in Form einer 29,7 gew.-%igen Dispersion mit ca. 30 nm Teilchengröße (bestimmt mittels analytischer Ultrazentrifuge) |
| Initiator A: | 7 gew.-%ige Lösung von Natriumperoxodisulfat (NaPS) |
| Initiator B: | 10 gew.-%ige Lösung von tert.-Butylhydroperoxid |
| Reduktionsmittel: | 13 gew.-%ige Lösung von Acetonbisulfit |

In allen Beispielen erfolgte die Dosierung der Zuläufe in einem gleichmäßigen Mengenstrom, sofern nicht anders angegeben.

### Herstellung der Emulsionspolymerisate

Die nachfolgenden Mengenangaben in pphm (parts per hundred monomer) sind auf 100 Gewichtsanteile Gesamtmonomer bezogen.

| | |
|---|---|
| Beispiel 1: | Emulsionspolymerisation von Styrol/Butadien/Acrylsäure/Acrylamid (57,7 /38,4 / 3,11 / 0,75) - erfindungsgemäß |

### Vorlage:

| | |
|---|---|
| 289,00 g | Wasser |
| 3,64 g | einer 29,7 gew.-%igen Dispersion eines Polystyrollatex (0,05 pphm) |
| 2,64 g | Acrylsäure (0,11 pphm) |
| 36,00 g | einer 2 gew.-%igen Lösung von EDTA (Komplexbildner) (0,03 pphm) |
| 2,40 g | einer 50 gew.-%igen Lösung von Acrylamid (0,05 pphm) |
| 6,40 g | einer 15 gew.-%igen Lösung von Natriumlaurylsulfat (Emulgator A) (0,04 pphm) |
| 48,00 g | Styrol (2,0 pphm) |
| 24,00 g | Butadien (1,0 pphm) |

### Zugabe 1:

| | |
|---|---|
| 51,43 g | einer 7% gew.-%igen Lösung von Natriumperoxodisulfat (Initiator A) (0,15 pphm) |

### Zulauf 1:

| | |
|---|---|
| 33,60 g | einer 50 gew.-%igen Lösung von Acrylamid (0,7 pphm) |
| 60,86 g | einer 28 gew.-%igen Lösung von ethoxiliertem Natriumlaurylethersulfat (Emulgator B) (0,71 pphm) |
| 54,72 g | einer 15 gew.-%igen Lösung von Natriumlaurylsulfat (0,34 pphm) |
| 16,00 g | 15 gew.-%ige Natronlauge (0,10 pphm) |
| 193,56 ml | Wasser |

### Zulauf 2:

| | |
|---|---|
| 72,00 g | Acrylsäure (3,0 pphm) |
| 1337,76 g | Styrol (55,74 pphm) |
| 24,00 g | tert-Dodecylmercaptan (1,00 pphm) |

### Zulauf 3:

| | |
|---|---|
| 897,60 g | Butadien (37,40 pphm) |

### Zulauf 4:

| | |
|---|---|
| 480,00 g | einer 7 gew.-%igen Lösung von Natriumperoxodisulfat (Initiator A) (1,40 pphm) |

### Zulauf 5 (Emulgatorschuss - über 12 min):

| | |
|---|---|
| 108,96 g | einer 15 gew.-%igen Lösung von Natriumlaurylsulfat (0,68 pphm) |

### Zulauf 6 (Emulgatorschuss - über 1 min):

| | |
|---|---|
| 80,00 g | einer 15 gew.-%igen Lösung von Natriumlaurylsulfat (0,5 pphm) |

### Zulauf 7:

| | |
|---|---|
| 40,80 g | einer 10 gew.-%igen Lösung von tert.-Butylhydroperoxid als (Initiator B) (0,17 pphm) |

### Zulauf 8:

| | |
|---|---|
| 45,96 g | einer 13,1 gew.-%igen Lösung von Acetonbisulfit (0,27 pphm) |

### Zulauf 9:

| | |
|---|---|
| 16,00 g | 15 gew.-%ige Natronlauge (0,10 pphm) |

In einem 6 l Druckreaktor wurden die Komponenten der Vorlage vorgelegt und gemischt. Die Vorlage wurde auf 95°C erwärmt. Bei Erreichen von 86°C wurde der Initiator A (Zugabe 1) in 5 min zugegeben und die Polymerisation gestartet und die Polymerisationsmischung wurde weitere 3 Minuten gerührt.

Unmittelbar im Anschluss wurde mit den Zuläufen 1, 2, 3 und 4 begonnen (Zeitpunkt: 0 Minuten) und die Temperatur kontinuierlich über einen Zeitraum von 30 Minuten auf 105°C erhöht. Die Zuläufe 1, 2, 3 und 4 erfolgten über einen Zeitraum von 4 Stunden. Zulauf 5 wurde nach 2 Stunden und 9 Minuten nach dem Start der Zuläufe 1, 2, 3 und 4 begonnen (Zeitpunkt: 2 Stunden und 9 Minuten) und erfolgte über 12 Minuten. Zulauf 6 wurde nach 3 Stunden und 20 Minuten nach dem Start der Zuläufe 1, 2, 3 und 4 begonnen (Zeitpunkt: 3 Stunden und 20 Minuten) und erfolgte über 1 Minute.

Nach Beendigung der Zudosierung der Zuläufe 1, 2, 3 und 4 wurde die Polymerisationsmischung weitere 30 Minuten gerührt. Anschließend wurde die Polymerisationsmischung auf eine Temperatur von 95°C gekühlt und danach 285,5 ml Wasser (11,89 pphm) zugegeben und mit einer 15 gew.-%ige Natronlauge auf pH = 5,5 neutralisiert. Anschließend wurden die Zuläufe 7, 8 und 9 gleichzeitig gestartet. Die Zuläufe 7 und 8 erfolgten über weitere 90 Minuten. Der Zulauf 9 erfolgte über 15 Minuten. Nach Ende der Zuläufe 7 und 8 wurde die Polymerisationsmischung auf Raumtemperatur gekühlt.

Die Emulsionspolymerisation mit den zwei "Emulgatorschüssen" führte zu einer niedrigviskosen Dispersion mit hohem Feststoffgehalt. Der Feststoffgehalt der Dispersion betrug 60 Gew.-%. Die Dispersion hatte bei pH 5,5 eine Viskosität von 590 mPas (Spindel 3, 100 U/min).

Die Polymerdispersion wurde mittels analytischer Ultrazentrifuge untersucht und zeigte eine bimodale Teilchengrößenverteilung:
Die Teilchenpopulation der "kleinen" Teilchen hatte ihr Peak-Maximum bei 155 nm. Der Anteil am Gesamtpolymer betrug 57 Gew.-%.
Die Teilchenpopulation der "großen" Teilchen hatte ihr Peak-Maximum bei 187 nm. Der Anteil am Gesamtpolymer betrug 43 Gew.-%

| | |
|---|---|
| Beispiel 2 | Emulsionspolymerisation von Styrol/Butadien/Acrylsäure/Acrylamid (63,74/32,40/ 3,11 / 0,75) - erfindungsgemäß |

### Vorlage:

| | |
|---|---|
| 289,00 g | Wasser |
| 3,64 g | einer 29,7 gew.-%igen Dispersion eines Polystyrollatex (0,05 pphm) |
| 2,64 g | Acrylsäure (0,11 pphm) |
| 36,00 g | einer 2 gew.-%igen Lösung von EDTA (Komplexbildner) (0,03 pphm) |
| 2,40 g | einer 50 gew.-%igen Lösung von Acrylamid (0,05 pphm) |
| 6,40 g | einer 15 gew.-%igen Lösung von Natriumlaurylsulfat (Emulgator A)(0,04 pphm) |
| 48,00 g | Styrol (2,0 pphm) |
| 24,00 g | Butadien (1,0 pphm) |

### Zugabe 1:

| | |
|---|---|
| 51,43 g | einer 7% gew.-%igen Lösung von Natriumperoxodisulfat (Initiator A) (0,15 pphm) |

### Zulauf 1:

| | |
|---|---|
| 33,60 g | einer 50 gew.-%igen Lösung von Acrylamid (0,7 pphm) |
| 60,86 g | einer 28 gew.-%igen Lösung von ethoxiliertem Natriumlaurylethersulfat (Emulgator B) (0,71 pphm) |
| 54,72 g | einer 15 gew.-%igen Lösung von Natriumlaurylsulfat (0,34 pphm) |
| 16,00 g | 15 gew.-%ige Natronlauge (0,10 pphm) |
| 193,56 ml | Wasser |

### Zulauf 2:

| | |
|---|---|
| 72,00 g | Acrylsäure (3,0 pphm) |
| 1481,76 g | Styrol (61,74 pphm) |
| 24,00 g | tert-Dodecylmercaptan (1,00 pphm) |

### Zulauf 3:

| | |
|---|---|
| 753,60 g | Butadien (31,40 pphm) |

### Zulauf 4:

| | |
|---|---|
| 480,00 g | einer 7 gew.-%igen Lösung von Natriumperoxodisulfat (Initiator A) (1,40 pphm) |

### Zulauf 5 (Emulgatorschuss - über 12 min):

| | |
|---|---|
| 108,96 g | einer 15 gew.-%igen Lösung von Natriumlaurylsulfat (0,68 pphm) |

### Zulauf 6 (Emulgatorschuss - über 6 min):

| | |
|---|---|
| 80,00 g | einer 15 gew.-%igen Lösung von Natriumlaurylsulfat (0,5 pphm) |

### Zulauf 7:

| | |
|---|---|
| 40,80 g | einer 10 gew.-%igen Lösung von tert.-Butylhydroperoxid als (Initiator B) (0,17 pphm) |

### Zulauf 8:

| | |
|---|---|
| 45,96 g | einer 13,1 gew.-%igen Lösung von Acetonbisulfit (0,27 pphm) |

### Zulauf 9:

| | |
|---|---|
| 16,00 g | 15 gew.-%ige Natronlauge (0,10 pphm) |

In einem 6 l Druckreaktor wurden die Komponenten der Vorlage vorgelegt und gemischt. Die Vorlage wurde auf 95°C erwärmt. Bei Erreichen von 86°C wurde der Initiator A (Zugabe 1) in 5 min zugegeben und die Polymerisation gestartet und die Polymerisationsmischung wurde weitere 3 Minuten gerührt.

Unmittelbar im Anschluss wurde mit den Zuläufen 1, 2, 3 und 4 begonnen (Zeitpunkt: 0 Minuten) und die Temperatur kontinuierlich über 30 Minuten auf 105°C erhöht. Die Zuläufe 1, 2, 3 und 4 erfolgten über einen Zeitraum von 4 Stunden. Zulauf 5 wurde nach 1 Stunde und 49 Minuten nach dem Start der Zuläufe 1, 2, 3 und 4 begonnen (Zeitpunkt: 1 Stunde und 49 Minuten) und erfolgte über 12 Minuten. Zulauf 6 wurde nach 2 Stunden und 25 Minuten nach dem Start der Zuläufe 1, 2, 3 und 4 begonnen (Zeitpunkt: 2 Stunden und 25 Minuten) und erfolgte über 6 Minuten.

Die Zuläufe 2, 3 und 4 wurden wie folgt jeweils zudosiert:
Über die ersten 20 Minuten wurden insgesamt 7% der zuzudosierenden Monomere zudosiert, wobei die Dosierrate linear anstieg. Über die folgenden 80 Minuten wurden insgesamt 42,7% der zuzudosierenden Monomere bei konstanter Dosierrate zudosiert. Über die folgenden 140 Minuten wurden insgesamt 50,3% der zuzudosierenden Monomere zudosiert, wobei die Dosierrate linear abfiel. Die Mengenverhältnisse der Monomere untereinander blieben unverändert.

Nach Beendigung der Zudosierung von Zuläufen 1, 2, 3 und 4 wurde die Polymerisationsmischung weitere 30 Minuten gerührt. Anschließend wurde die Polymerisationsmischung auf eine Temperatur von 100°C gekühlt und danach 285,5 ml Wasser (11,89 pphm) zugegeben und mit einer 15 gew.-%ige Natronlauge auf pH = 5,5 neutralisiert. Die Zuläufe 7, 8 und 9 wurden danach gestartet. Die Zuläufe 7 und 8 erfolgten über weitere 90 Minuten. Der Zulauf 9 erfolgte über 15 Minuten. Nach Ende der Zuläufe 7 und 8 wurde die Polymerisationsmischung auf Raumtemperatur gekühlt.

Die Emulsionspolymerisation mit den zwei "Emulgatorschüssen" führte zu einer niedrigviskosen Dispersion mit hohem Feststoffgehalt. Der Feststoffgehalt der Dispersion betrug 60 Gew.-%. Die Dispersion hatte bei pH 5,5 eine Viskosität von 677 mPas (Spindel 3, 100 U/min)

Die Polymerdispersion wurde mittel analytischer Ultrazentrifuge untersucht und zeigte eine multimodale Teilchengrößenverteilung:
Die Teilchenpopulation der "kleinen" Teilchen hatte ihr Peak-Maximum bei 30 nm. Der Anteil am Gesamtpolymer betrug 17 Gew.-%.
Die Teilchenpopulation der "mittelgroßen" Teilchen hatte ihr Peak-Maximum bei 135 nm. Der Anteil am Gesamtpolymer betrug 33 Gew.-%
Die Teilchenpopulation der "großen" Teilchen hatte ihr Peak-Maximum bei 170 nm. Der Anteil am Gesamtpolymer betrug 50 Gew.-%

| | |
|---|---|
| Beispiel 3 | Emulsionspolymerisation von Styrol/Butadien/Acrylsäure/Acrylamid (57,74/38,4/ 3,11 / 0,75) - erfindungsgemäß |

### Vorlage:

| | |
|---|---|
| 289,00 g | Wasser |
| 3,64 g | einer 29,7 gew.-%igen Dispersion eines Polystyrollatex (0,05 pphm) |
| 2,64 g | Acrylsäure (0,11 pphm) |
| 36,00 g | einer 2 gew.-%igen Lösung von EDTA (Komplexbildner) (0,03 pphm) |
| 2,40 g | einer 50 gew.-%igen Lösung von Acrylamid (0,05 pphm) |
| 6,40 g | einer 15 gew.-%igen Lösung von Natriumlaurylsulfat (Emulgator A) (0,04 pphm) |
| 48,00 g | Styrol (2,0 pphm) |
| 24,00 g | Butadien (1,0 pphm) |

### Zugabe 1:

| | |
|---|---|
| 51,43 g | einer 7 gew.-%igen Lösung von Natriumperoxodisulfat (Initiator A) (0,15 pphm) |

### Zulauf 1:

| | |
|---|---|
| 33,60 g | einer 50 gew.-%igen Lösung von Acrylamid (0,7 pphm) |
| 60,86 g | einer 28 gew.-%igen Lösung von ethoxiliertem Natriumlaurylethersulfat (Emulgator B) (0,71 pphm) |
| 54,72 g | einer 15 gew.-%igen Lösung von Natriumlaurylsulfat (0,34 pphm) |
| 16,00 g | 15 gew.-%ige Natronlauge (0,10 pphm) |
| 193,56 ml | Wasser |

### Zulauf 2:

| | |
|---|---|
| 72,00 g | Acrylsäure (3,0 pphm) |
| 1337,76 g | Styrol (55,74 pphm) |
| 24,00 g | tert-Dodecylmercaptan (1,00 pphm) |

### Zulauf 3:

| | |
|---|---|
| 897,60 g | Butadien (37,40 pphm) |

### Zulauf 4:

| | |
|---|---|
| 480,00 g | einer 7 gew.-%igen Lösung von Natriumperoxodisulfat (Initiator A) (1,40 pphm) |

### Zulauf 5 (Emulgatorschuss - über 12 min):

| | |
|---|---|
| 108,96 g | einer 15 gew.-%igen Lösung von Natriumlaurylsulfat (0,68 pphm) |

### Zulauf 6 (Emulgatorschuss - über 6 min):

| | |
|---|---|
| 80,00 g | einer 15 gew.-%igen Lösung von Natriumlaurylsulfat (0,5 pphm) |

### Zulauf 7:

| | |
|---|---|
| 40,80 g | einer 10 gew.-%igen Lösung von tert.-Butylhydroperoxid als (Initiator B) (0,17 pphm) |

### Zulauf 8:

| | |
|---|---|
| 45,96 g | einer 13,1 gew.-%igen Lösung von Acetonbisulfit (0,27 pphm) |

### Zulauf 9:

| | |
|---|---|
| 16,00 g | 15 gew.-%ige Natronlauge (0,10 pphm) |

In einem 6 l Druckreaktor wurden die Komponenten der Vorlage vorgelegt und gemischt. Die Vorlage wurde auf 95°C erwärmt. Bei Erreichen von 86°C wurde der Initiator A (Zugabe 1) in 5 min zugegeben und die Polymerisation gestartet und die Polymerisationsmischung wurde weitere 3 Minuten gerührt.

Unmittelbar im Anschluss wurde mit den Zuläufen 1, 2, 3 und 4 begonnen (Zeitpunkt: 0 Minuten) und die Temperatur kontinuierlich über einen Zeitraum von 30 Minuten auf 105°C erhöht. Die Zuläufe 1, 2, 3 und 4 erfolgten über einen Zeitraum von 4 Stunden. Zulauf 5 wurde nach 1 Stunde und 49 Minuten nach dem Start der Zuläufe 1, 2, 3 und 4 begonnen (Zeitpunkt: 1 Stunde und 49 Minuten) und erfolgte über 12 Minuten. Zulauf 6 wurde nach 3 Stunden und 20 Minuten nach dem Start der Zuläufe 1, 2, 3 und 4 begonnen (Zeitpunkt: 3 Stunden und 20 Minuten) und erfolgte über 6 Minuten.

Die Zuläufe 2, 3 und 4 wurden wie folgt zudosiert:
Über die ersten 20 Minuten wurden insgesamt 7% der zuzudosierenden Monomere zudosiert, wobei die Dosierrate linear anstieg. Über die darauffolgenden 80 Minuten wurden insgesamt 42,7% der zuzudosierenden Monomere bei konstanter Dosierrate zudosiert. Über die darauffolgenden 140 Minuten wurden insgesamt 50,3% der zuzudosierenden Monomere zudosiert, wobei die Dosierrate linear abfiel. Die Mengenverhältnisse der Monomere untereinander blieben unverändert.

### Nach Beendigung der Zudosierung der Zuläufe 1, 2, 3 und 4 wurde die Polymerisationsmischung weitere 30 Minuten gerührt. Anschließend wurde die Polymerisationsmischung auf eine Temperatur von 100°C gekühlt und danach 285,5 ml Wasser (11,89 pphm) zudosiert und mit einer 15 gew.-%ige Natronlauge auf pH = 5,5 neutralisiert. Die Zuläufe 7, 8 und 9 wurden danach gestartet. Die Zuläufe 7 und 8 erfolgten über weitere 90 Minuten. Der Zulauf 9 erfolgte über 15 Minuten. Nach Ende der Zuläufe 7 und 8 wurde die Polymerisationsmischung auf Raumtemperatur gekühlt.

Die Emulsionspolymerisation mit den zwei "Emulgatorschüssen" führte zu einer niedrigviskosen Dispersion mit hohem Feststoffgehalt. Der Feststoffgehalt der Dispersion betrug 60 Gew.-%. Die Dispersion hatte bei pH 5,5 eine Viskosität von 412 mPas (Spindel 3, 100 U/min).

Die Polymerdispersion wurde mittel analytischer Ultrazentrifuge untersucht und zeigte eine multimodale Teilchengrößenverteilung:
Die Teilchenpopulation der "kleinen" Teilchen hatte ihr Peak-Maximum bei 30 nm. Der Anteil am Gesamtpolymer betrug 20 Gew.-%.
Die Teilchenpopulation der "mittelgroßen" Teilchen hatte ihr Peak-Maximum bei 140 nm. Der Anteil am Gesamtpolymer betrug 43 Gew.-%
Die Teilchenpopulation der "großen" Teilchen hatte ihr Peak-Maximum bei 165 nm. Der Anteil am Gesamtpolymer betrug 37 Gew.-%

| | |
|---|---|
| Beispiel 4: | Emulsionspolymerisation von Styrol/Butadien/Methacrylsäure/Acrylamid (57,74/38,4/ 3,11 / 0,75) - erfindungsgemäß |

Die Polymerisation wurde wie in Beispiel 3 beschrieben durchgeführt mit dem Unterschied, dass die Acrylsäure jeweils durch Methacrylsäure ersetzt wurde. Die Emulsionspolymerisation mit den zwei "Emulgatorschüssen" führte zu einer niedrigviskosen Dispersion mit hohem Feststoffgehalt.

Der Feststoffgehalt der Dispersion betrug 60 Gew.-%.

Die Dispersion hatte bei pH 5,5 eine Viskosität von 360 mPas.

Die Polymerdispersion wurde mittel analytischer Ultrazentrifuge untersucht und zeigte eine multimodale Teilchengrößenverteilung:
Die Teilchenpopulation der "kleinen" Teilchen hatte ihr Peak-Maximum bei 40 nm. Der Anteil am Gesamtpolymer betrug 23 Gew.-%.
Die Teilchenpopulation der "mittelgroßen" Teilchen hatte ihr Peak-Maximum bei 162 nm. Der Anteil am Gesamtpolymer betrug 40 Gew.-%
Die Teilchenpopulation der "großen" Teilchen hatte ihr Peak-Maximum bei 188 nm. Der Anteil am Gesamtpolymer betrug 37 Gew.-%

| | |
|---|---|
| Beispiel 5: | Emulsionspolymerisation von Styrol/Butadien/Acrylsäure (57,6 / 38,4/ 4) - nicht erfindungsgemäß |

### Vorlage:

| | |
|---|---|
| 372,00 g | Wasser |
| 21,2 g | einer 29,7 gew.-%igen Dispersion eines Polystyrollatex (0,3 pphm) |
| 12,00 g | einer 2 gew.-%igen Lösung von EDTA (Komplexbildner) (0,01 pphm) |
| 19,20 g | einer 15 gew.-%igen Lösung von Natriumlaurylsulfat (Emulgator A)(0,12 pphm) |
| 48,00 g | Styrol (2,0 pphm) |
| 24,00 g | Butadien (1,0 pphm) |

### Zugabe 1:

| | |
|---|---|
| 51,43 g | einer 7% gew.-%igen Lösung von Natriumperoxodisulfat (Initiator A) (0,15 pphm) |

### Zulauf 1:

| | |
|---|---|
| 42,86 g | einer 28 gew.-%igen Lösung von ethoxiliertem Natriumlaurylethersulfat (Emulgator B) (0,5 pphm) |
| 38,40 g | einer 15 gew.-%igen Lösung von Natriumlaurylsulfat (0,24 pphm) |
| 16,00 g | 15 gew.-%ige Natronlauge (0,10 pphm) |
| 266,64 ml | Wasser |

### Zulauf 2:

| | |
|---|---|
| 96,00 g | Acrylsäure (4,0 pphm) |
| 1334,40 g | Styrol (55,74 pphm) |
| 24,00 g | tert-Dodecylmercaptan (1,00 pphm) |

### Zulauf 3:

| | |
|---|---|
| 897,60 g | Butadien (37,40 pphm) |

### Zulauf 4:

| | |
|---|---|
| 291,43 g | einer 7 gew.-%igen Lösung von Natriumperoxodisulfat (Initiator A) (0,85 pphm) |

### Zulauf 5 (Emulgatorschuss - über 12 min):

| | |
|---|---|
| 160,00 g | einer 15 gew.-%igen Lösung von Natriumlaurylsulfat (1,0 pphm) |

### Zulauf 6:

| | |
|---|---|
| 40,80 g | einer 10 gew.-%igen Lösung von tert.-Butylhydroperoxid als (Initiator B) (0,17 pphm) |

### Zulauf 7:

| | |
|---|---|
| 45,96 g | einer 13,1 gew.-%igen Lösung von Acetonbisulfit (0,27 pphm) |

### Zulauf 8:

| | |
|---|---|
| 72,00 g | 25 gew.-%ige Natronlauge (0,10 pphm) |

In einem 6 l Druckreaktor wurden die Komponenten der Vorlage vorgelegt und gemischt. Die Vorlage wurde auf 95°C erwärmt. Bei Erreichen von 86°C wurde der Initiator A (Zugabe 1) in 5 min zugegeben und die Polymerisation gestartet und die Polymerisationsmischung wurde weitere 3 Minuten gerührt.

Unmittelbar im Anschluss wurde mit den Zuläufen 1, 2, 3 und 4 begonnen (Zeitpunkt: 0 Minuten) und die Temperatur kontinuierlich über einen Zeitraum von 30 Minuten auf 105°C erhöht. Die Zuläufe 1, 2, 3 und 4 erfolgten über einen Zeitraum von 4 Stunden. Zulauf 5 wurde nach 2 Stunden und 36 Minuten nach dem Start der Zuläufe 1, 2, 3 und 4 begonnen (Zeitpunkt: 2 Stunden und 36 Minuten) und erfolgte über 12 Minuten. Nach Beendigung der Zudosierung von Zuläufen 1, 2, 3 und 4 wurde die Polymerisationsmischung weitere 30 Minuten gerührt. Anschließend wurde die Polymerisationsmischung auf eine Temperatur von 95°C gekühlt und danach 343,92 ml Wasser (14,33 pphm) zudosiert und mit einer 15 gew.-%ige Natronlauge bis zu pH = 5,5 neutralisiert.

Die Zuläufe 7, 8 und 9 wurden danach gestartet. Die Zuläufe 7 und 8 erfolgten über weitere 90 Minuten. Der Zulauf 9 erfolgte über 15 Minuten. Nach Ende der Zuläufe 7 und 8 wurde die Polymerisationsmischung auf Raumtemperatur gekühlt.

Die Polymerisation mit nur einem "Emulgatorschuss" mit einem Wasseranteil, der zu einem Feststoffgehalt von 60 Gew.-% führen sollte, führte zu Koagulat.

## Patentansprüche

1. Verfahren zur Herstellung einer wässrigen Polymerdispersion, durch radikalisch initiierte wässrige Emulsionspolymerisation, **dadurch gekennzeichnet, dass** man in einem wässrigen Medium
| | | |
|---|---|---|
| (a) | 40 bis 75 Gew.-Teile | Styrol, |
| (b) | 24,9 bis 59,9 Gew.-Teile | Butadien, |
| (c) | 0,1 bis 10 Gew.-Teile | mindestens einer ethylenisch ungesättigten Carbonsäure und |
| (d) | 0 bis 15 Gew.-Teile | eines oder mehrerer sonstiger Monomere, |
wobei sich die Gewichtsteile der Monomeren (a) bis (d) auf 100 Gew.-Teile aufsummieren, nach einem Monomerzulaufverfahren polymerisiert, welches die folgenden Schritte umfasst:
a) Vorlegen eines Saatlatex und 1 bis 10 Gew.-Teile Monomere bezogen auf die Gesamtmonomermenge,
b) Starten der Polymerisation bei einer Temperatur ≥ 80°C in dieser Vorlage,
c) und anschließendes stetiges Dosieren von Monomeren und Emulgator zu diesem Reaktionsgemisch,
c1) wobei zu einem Zeitpunkt, wenn 40 bis 55 % der Gesamtdosierzeit der Monomere verstrichen ist und 40 bis 55 Gew-Teile der zuzudosierenden Monomermenge zudosiert sind, die Dosierrate des Emulgators für eine Periode P2, die längstens 30 Minuten dauert, auf das 10 bis 150-fache der Durchschnittsdosierrate des Emulgators während der Periode P1 erhöht, wobei die Periode P1 die davorliegende Zeitspanne beginnend mit dem Start der Emulgatordosierung ist,
c2) und zu einem Zeitpunkt, wenn 60 bis 85 % der Gesamtdosierzeit der Monomere verstrichen ist und 60 bis 85 Gew-Teile der zuzudosierenden Monomermenge zudosiert sind, die Dosierrate des Emulgators für eine Periode P4, die längstens 30 Minuten dauert, auf das 10 bis 150-fache der Durchschnittsdosierrate des Emulgators der Periode P1 erhöht,
mit der Maßgabe, dass die wässrige Polymerdispersion einen Feststoffgehalt von ≥58 Gew.-% aufweist.

2. Verfahren nach Anspruch 1, **dadurch gekennzeichnet, dass** die ethylenisch ungesättigte Carbonsäure ausgewählt ist unter Acrylsäure, Methacrylsäure und Itaconsäure.

3. Verfahren nach Anspruch 1 oder 2, **dadurch gekennzeichnet, dass** 0,1 bis 15 Gew.-Teile sonstiges Monomer (d) polymerisiert werden.

4. Verfahren nach einem der Ansprüche 1 bis 3, **dadurch gekennzeichnet, dass** das sonstige Monomer (d) ausgewählt ist unter Acrylamid, Methacrylamid, Acrylnitril, Methacrylnitril, N-Methylolacrylamid, N-Methylol(meth)acrylamid, Vinylestern von gesättigten C₁- bis C₁₈-Carbonsäuren, Estern der Acrylsäure und der Methacrylsäure mit einwertigen C₁- bis C₁₈-Alkoholen, Allylestern gesättigter Carbonsäuren, Vinylethern, Vinylketonen, Dialkylestern ethylenisch ungesättigter Carbonsäuren, N-Vinylpyrrolidon, N-Vinylpyrrolidin, N-Vinylformamid, N,N-Dialkylamonialkylacrylamiden, N,N-Dialkylaminoalkylmethacrylamiden, N,N-Dialkylaminoalkylacrylaten, N,N-Dialkylaminoalkylmethacrylaten, Vinylchlorid und Vinylidenchlorid und ihren Mischungen.

5. Verfahren nach einem der Ansprüche 1 bis 4, **dadurch gekennzeichnet, dass** man im wässrigen Medium
| | | |
|---|---|---|
| (a) | 40 bis 75 Gew.-Teile | Styrol, |
| (b) | 24,8 bis 59,8 Gew.-Teile | Butadien, |
| (c) | 0,1 bis 10 Gew.-Teile | mindestens einer ethylenisch ungesättigten Carbonsäure, |
| (d1) | 0,1 bis 5 Gew.-Teile | Acrylamid und/oder Methacrylamid, |
| (d2) | 0 bis 10 Gew.-Teile | ein oder mehrere sonstige monoethylenisch ungesättigte Monomere, |
wobei sich die Gewichtsteile der Monomeren (a) bis (d) auf 100 Gew.-Teile aufsummieren, polymerisiert.

6. Verfahren nach einem der Ansprüche 1 bis 5, **dadurch gekennzeichnet, dass** die wässrige Polymerdispersion einen Feststoffgehalt von ≥59 Gew.-% aufweist.

7. Verfahren nach einem der Ansprüche 1 bis 6, **dadurch gekennzeichnet, dass** die Monomere in einem stetigen Mengenstrom über einen Zeitraum von mindestens 100 Minuten, zudosiert werden.

8. Verfahren nach einem der Ansprüche 1 bis 7, **dadurch gekennzeichnet, dass** der Emulgator ausgewählt wird unter Alkali- und Ammoniumsalzen von C₈-C₂₂-Alkylsulfaten, Schwefelsäurehalbestern ethoxylierter Alkanole, Schwefelsäurehalbestern ethoxylierter Alkylphenole, und Bis(phenylsulfonsäure)ether bzw. deren Alkali- oder Ammoniumsalze, die an einem oder beiden aromatischen Ringen eine C₄-C₂₄-Alkylgruppe tragen.

9. Verfahren nach einem der Ansprüche 1 bis 8, **dadurch gekennzeichnet, dass** 0,1 bis 5 Gew.-Teile Emulgator bezogen auf 100 Gew.-Teile Monomere in Mischung mit mindestens einem Monomer stetig dosiert werden.

10. Verfahren nach einem der Ansprüche 1 bis 9, **dadurch gekennzeichnet, dass** man bei einer Temperatur im Bereich von ≥ 80°C bis ≤ 115°C polymerisiert.

11. Verfahren nach einem der Ansprüche 1 bis 10, **dadurch gekennzeichnet, dass** als Saatlatex ein Styrolpolymer und/oder Methylmethacrylatpolymer mit einer Glasübergangstemperatur ≥ 50 °C nach DIN EN ISO 11357-2 (2013-09) einsetzt.

## Claims

1. A process for producing an aqueous polymer dispersion by free-radically initiated aqueous emulsion polymerization, wherein, in an aqueous medium,
(a) 40 to 75 parts by weight of styrene,
(b) 24.9 to 59.9 parts by weight of butadiene,
(c) 0.1 to 10 parts by weight of at least one ethylenically unsaturated carboxylic acid and
(d) 0 to 15 parts by weight of one or more other monomers,
where the parts by weight of monomers (a) to (d) add up to 100 parts by weight, are polymerized by a monomer feed process comprising the following steps:
a) initially charging a seed latex and 1 to 10 parts by weight of monomers based on the total amount of monomers,
b) initiating the polymerization at a temperature ≥ 80°C in this initial charge,
c) and then constantly metering monomers and emulsifier into this reaction mixture,
c1) wherein, at a time when 40% to 55% of the total monomer metering time has elapsed and 40 to 55 parts by weight of the amount of monomers to be metered in have been metered in, the metering rate of the emulsifier is increased for a period P2 of not longer than 30 minutes to 10 to 150 times the average metering rate of the emulsifier during the period P1, where the period P1 is the preceding period of time commencing with the start of emulsifier metering,
c2) and, at a time when 60% to 85% of the total monomer metering time has elapsed and 60 to 85 parts by weight of the amount of monomers to be metered in have been metered in, the metering rate of the emulsifier is increased for a period P4 of not longer than 30 minutes to 10 to 150 times the average metering rate of the emulsifier in period P1,
with the proviso that the aqueous polymer dispersion has a solids content of ≥ 58% by weight.

2. The process according to claim 1, wherein the ethylenically unsaturated carboxylic acid is selected from acrylic acid, methacrylic acid and itaconic acid.

3. The process according to claim 1 or 2, wherein 0.1 to 15 parts by weight of other monomer (d) are polymerized.

4. The process according to any of claims 1 to 3, wherein the other monomer (d) is selected from acrylamide, methacrylamide, acrylonitrile, methacrylonitrile, N-methylolacrylamide, N-methylol(meth)acrylamide, vinyl esters of saturated C₁ to C₁₈ carboxylic acids, esters of acrylic acid and methacrylic acid with monohydric C₁ to C₁₈ alcohols, allyl esters of saturated carboxylic acids, vinyl ethers, vinyl ketones, dialkyl esters of ethylenically unsaturated carboxylic acids, N-vinylpyrrolidone, N-vinylpyrrolidine, N-vinylformamide, N,N-dialkylaminoalkylacrylamides, N,N-dialkylaminoalkylmethacrylamides, N,N-dialkylaminoalkyl acrylates, N,N-dialkylaminoalkyl methacrylates, vinyl chloride and vinylidene chloride, and mixtures thereof.

5. The process according to any of claims 1 to 4, wherein the following are polymerized in the aqueous medium:
(a) 40 to 75 parts by weight of styrene,
(b) 24.8 to 59.8 parts by weight of butadiene,
(c) 0.1 to 10 parts by weight of at least one ethylenically unsaturated carboxylic acid,
(d1) 0.1 to 5 parts by weight of acrylamide and/or methacrylamide,
(d2) 0 to 10 parts by weight of one or more other monoethylenically unsaturated monomers,
where the parts by weight of monomers (a) to (d) add up to 100 parts by weight.

6. The process according to any of claims 1 to 5, wherein the aqueous polymer dispersion has a solids content of ≥ 59% by weight.

7. The process according to any of claims 1 to 6, wherein the monomers are metered in at a constant mass flow rate over a period of at least 100 minutes.

8. The process according to any of claims 1 to 7, wherein the emulsifier is selected from alkali metal and ammonium salts of C₈-C₂₂-alkyl sulfates, sulfuric monoesters of ethoxylated alkanols, sulfuric monoesters of ethoxylated alkylphenols, and bis(phenylsulfonic acid) ethers or the alkali metal or ammonium salts thereof that bear a C₄-C₂₄-alkyl group on one or both aromatic rings.

9. The process according to any of claims 1 to 8, wherein 0.1 to 5 parts by weight of emulsifier per 100 parts by weight of monomers are metered continuously in a mixture with at least one monomer.

10. The process according to any of claims 1 to 9, wherein polymerization is effected at a temperature in the range from ≥ 80°C to ≤ 115°C.

11. The process according to any of claims 1 to 10, wherein the seed latex used is a styrene polymer and/or methyl methacrylate polymer having a glass transition temperature ≥ 50°C according to DIN EN ISO 11357-2 (2013-09) .

## Revendications

1. Procédé de préparation d'une dispersion aqueuse de polymère par polymérisation en émulsion aqueuse amorcée par voie radicalaire, **caractérisé en ce qu'**on polymérise dans un milieu aqueux
(a) 40 à 75 parties en poids de styrène ;
(b) 24,9 à 59,9 parties en poids de butadiène ;
(c) 0,1 à 10 parties en poids d'au moins un acide carboxylique éthyléniquement insaturé et
(d) 0 à 15 parties en poids d'un ou plusieurs autres monomères,
les parties en poids des monomères (a) à (d) s'additionnant jusqu'à donner 100 parties en poids, selon un procédé d'alimentation en monomères qui comprend les étapes suivantes consistant à :
a) charger initialement un latex d'ensemencement et 1 à 10 parties en poids de monomères par rapport à la quantité totale de monomères,
b) démarrer la polymérisation à une température ≥ 80°°C dans cette charge initiale,
c) puis doser en continu des monomères et de l'émulsifiant dans ce mélange réactionnel,
c1) dans lequel, à un moment où 40 % à 55 % du temps de dosage total des monomères se s'écoulé et où 40 à 55 parties en poids de la quantité de monomères à ajouter ont été ajoutées, la vitesse de dosage de l'émulsifiant est augmentée, pendant une période P2 qui dure au maximum 30 minutes, à 10 à 150 fois la vitesse de dosage moyenne de l'émulsifiant pendant la période P1, la période P1 étant la période précédente commençant au début du dosage de l'émulsifiant,
c2) et à un moment où 60 à 85 % du temps total de dosage des monomères s'est écoulé et où 60 à 85 parties en poids de la quantité de monomères à ajouter ont été ajoutées, la vitesse de dosage de l'émulsifiant est augmentée pendant une période P4, qui dure au maximum 30 minutes, à 10 à 150 fois la vitesse de dosage moyenne de l'émulsifiant de la période P1,
à condition que la dispersion aqueuse de polymère présente une teneur en matières solides ≥ 58 % en poids.

2. Procédé selon la revendication 1, **caractérisé en ce que** l'acide carboxylique éthyléniquement insaturé est choisi parmi l'acide acrylique, l'acide méthacrylique et l'acide itaconique.

3. Procédé selon la revendication 1 ou 2, **caractérisé en ce que** 0,1 à 15 parties en poids de l'autre monomère (d) sont polymérisés.

4. Procédé selon l'une quelconque des revendications 1 à 3, **caractérisé en ce que** l'autre monomère (d) est choisi parmi l'acrylamide, le méthacrylamide, l'acrylonitrile, le méthacrylonitrile, le N-méthylolacrylamide, le N-méthylol(méth)acrylamide, les esters vinyliques d'acides carboxyliques saturés en C₁ à C₁₈, les esters de l'acide acrylique et de l'acide méthacrylique avec des monoalcools en C₁ à C₁₈, les esters allyliques d'acides carboxyliques saturés, les éthers vinyliques, les vinylcétones, les esters dialkyliques d'acides carboxyliques éthyléniquement insaturés, la N-vinylpyrrolidone, la N-vinylpyrrolidine, le N-vinylformamide, les N,N-dialkylaminoalkylacrylamides, les N,N-dialkylaminoalkylméthacrylamides, les N,N-dialkylaminoalkylacrylates, les N,N-dialkylaminoalkylméthacrylates, le chlorure de vinyle et le chlorure de vinylidène et des mélanges de ceux-ci.

5. Procédé selon l'une quelconque des revendications 1 à 4, **caractérisé en ce que** l'on polymérise dans le milieu aqueux
(a) 40 à 75 parties en poids de styrène,
(b) 24,8 à 59,8 parties en poids de butadiène ;
(c) 0,1 à 10 parties en poids d'au moins un acide carboxylique éthyléniquement insaturé,
(d1) 0,1 à 5 parties en poids d'acrylamide et/ou de méthacrylamide,
(d2) 0 à 10 parties en poids d'un ou plusieurs autres monomères monoéthyléniquement insaturés,
les quantités des monomères (a) à (d) s'additionnant jusqu'à donner 100 parties en poids,

6. Procédé selon l'une quelconque des revendications 1 à 5, **caractérisé en ce que** la dispersion aqueuse de polymère présente une teneur en matières solides ≥59 % en poids.

7. Procédé selon l'une quelconque des revendications 1 à 6, **caractérisé en ce qu'**on ajoute les monomères en un flux quantitatif continu pendant une période d'au moins 100 minutes.

8. Procédé selon l'une quelconque des revendications 1 à 7, **caractérisé en ce que** l'émulsifiant est choisi parmi les sels de métal alcalin et les sels d'ammonium d'alkylsulfates en C₈-C₂₂, les hémiesters d'acide sulfurique d'alcanols éthoxylés, les hémiesters d'acide sulfurique d'alkylphénols éthoxylés, et les bis(acide phénylsulfonique)éther ou les sels de métal alcalin ou les sels d'ammonium de ceux-ci qui portent un groupe alkyle en C₄-C₂₄ sur un cycle aromatique ou sur les deux.

9. Procédé selon l'une quelconque des revendications 1 à 8, **caractérisé en ce que** l'on dose en continu de 0,1 à 5 parties en poids d'émulsifiant par rapport à 100 parties en poids de monomères en mélange avec au moins un monomère.

10. Procédé selon l'une quelconque des revendications 1 à 9, **caractérisé en ce que** l'on polymérise à une température dans la plage de ≥ 80 °C à ≤ 115 °C.

11. Procédé selon l'une quelconque des revendications 1 à 10, **caractérisé en ce que** l'on utilise comme latex d'ensemencement un polymère de styrène et/ou un polymère de méthacrylate de méthyle présentant une température de transition vitreuse ≥ 50 °C selon la norme DIN EN ISO 11357-2 (2013-09).
